(19) Europäisches Patentamt
European Patent Office
Office européen des brevets

(11) **EP 4 332 483 A1**

(12) **EUROPÄISCHE PATENTANMELDUNG**

(43) Veröffentlichungstag:
**06.03.2024   Patentblatt 2024/10**

(21) Anmeldenummer: **22192633.0**

(22) Anmeldetag: **29.08.2022**

(51) Internationale Patentklassifikation (IPC):
**F27B 1/00** (2006.01)    **C04B 2/12** (2006.01)
**F27B 1/10** (2006.01)    **F27D 17/00** (2006.01)

(52) Gemeinsame Patentklassifikation (CPC):
**F27B 1/005; C04B 2/12; F27B 1/10; F27B 1/26;**
**F27D 17/004; F27D 17/008;** C04B 2/10

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fels-Werke GmbH**
**38640 Goslar (DE)**

(72) Erfinder:
• **REDEMANN, Tino**
**38855 Wernigerode (DE)**
• **DOMBROWSKI, Gerrit**
**38312 Cramme (DE)**
• **WEBER, Henning**
**38304 Wolfenbüttel (DE)**

(74) Vertreter: **Maikowski & Ninnemann**
**Patentanwälte Partnerschaft mbB**
**Postfach 15 09 20**
**10671 Berlin (DE)**

(54) **VERFAHREN UND VORRICHTUNG ZUR HERSTELLUNG VON GEBRANNTEM KALK ODER DOLOMIT**

(57)    Die Erfindung betrifft eine Vorrichtung zur Herstellung von gebranntem Kalk oder Dolomit, welche
• einen Schachtofen aufweisend eine Vorwärmzone, eine Reaktionszone, eine Trennzone und eine Kühlzone;
• eine erste Zuführvorrichtung für $CO_2$ an der Grenze der Trennzone zur Reaktionszone;
• eine erste Abzugsvorrichtung an der Grenze der Kühlzone zur Trennzone;
• eine zweite Abzugsvorrichtung für $CO_2$ am Beginn der Vorwärmzone; und
• mindestens eine Wärmvorrichtung
aufweist. Die Vorrichtung ist dadurch gekennzeichnet, dass
der Schachtofen weiterhin eine dritte Abzugsvorrichtung für $CO_2$ oberhalb der Reaktionszone aufweist;
die dritte Abzugsvorrichtung außerhalb des Schachtofens vor der mindestens einen Wärmvorrichtung in die zweite Abzugsvorrichtung mündet;
die zweite Abzugsvorrichtung in die mindestens eine Wärmvorrichtung mündet; und
die erste Zuführvorrichtung von der mindestens einen Wärmvorrichtung zum Schachtofen ausgebildet ist.
    Weiterhin betrifft die Erfindung ein Verfahren zur Herstellung von gebranntem Kalk oder Dolomit, bei dem die Entsäuerungsreaktion unter einer $CO_2$ Atmosphäre abläuft und die notwendige Prozessenergie über erwärmtes $CO_2$ eingebracht wird, welches in einem Kreislauf geführt wird.

FIG 2

**Beschreibung**

Die Erfindung betrifft eine Vorrichtung zur Herstellung von gebranntem Kalk oder Dolomit, welche

- einen Schachtofen aufweisend eine Vorwärmzone, eine Reaktionszone, eine Trennzone und eine Kühlzone;
- eine erste Zuführvorrichtung für $CO_2$ an der Grenze der Trennzone zur Reaktionszone;
- eine erste Abzugsvorrichtung an der Grenze der Kühlzone zur Trennzone;
- eine zweite Abzugsvorrichtung für $CO_2$ am Beginn der Vorwärmzone; und
- mindestens eine Wärmvorrichtung

aufweist. Die Vorrichtung ist dadurch gekennzeichnet, dass
der Schachtofen weiterhin eine dritte Abzugsvorrichtung für $CO_2$ oberhalb der Reaktionszone aufweist;
die dritte Abzugsvorrichtung außerhalb des Schachtofens vor der mindestens einen Wärmvorrichtung in die zweite Abzugsvorrichtung mündet;
die zweite Abzugsvorrichtung in die mindestens eine Wärmvorrichtung mündet; und
die erste Zuführvorrichtung von der mindestens einen Wärmvorrichtung zum Schachtofen ausgebildet ist.

Weiterhin betrifft die Erfindung ein Verfahren zur Herstellung von gebranntem Kalk oder Dolomit, bei dem die Entsäuerungsreaktion unter einer $CO_2$-Atmosphäre abläuft und die notwendige Prozessenergie über erwärmtes $CO_2$ eingebracht wird, welches in einem Kreislauf geführt wird.

Die gesamte Industrie steht vor der Herausforderung der Energiewende und der Umstellung auf eine klimaneutrale Produktion. Gerade die Kalkindustrie steht unter besonderem Druck aufgrund der prozessbedingt hohen $CO_2$-Emissionen, die beispielsweise bei der Umwandlung von Kalkstein zu Kalk (1), bzw. von Calcit zu Calciumoxid, freigesetzt werden.

$$CaCO_3 \rightarrow CaO + CO_2 \qquad (1)$$

Im klassischen Schachtofen wird der Energieeintrag zum Brennen des Kalks oder des Dolomits durch einen Verbrennungsprozess innerhalb des Schachtofens gewährleistet. Zusätzlich zu dem $CO_2$, das beim Brennen des Kalksteins aus diesem herausgelöst wird, entstehen dabei $CO_2$-Emissionen durch das Verbrennen eines kohlenstoffhaltigen Brennstoffs im Schachtofen. In Abhängigkeit des Ofentyps führt dies insgesamt zu einer $CO_2$-Konzentration von rund 20 bis 40% in den Abgasen. Im Sinne des Umweltschutzes ist es wünschenswert, die Abgabe von $CO_2$ an die Umwelt zu reduzieren. Darüber hinaus darf der wirtschaftliche Gesichtspunkt nicht außer Acht gelassen werden, da im zunehmenden Maße eine staatliche Bepreisung auf die Emission von $CO_2$ stattfindet. Im gesamten industriellen Umfeld werden in diesem Bereich daher Entwicklungen vorangetrieben, um die $CO_2$-Emission beim Kalkbrennen zu minimieren. Das Interesse der Industrie an neuen Verfahren zum Brennen von Kalk oder Dolomit, die möglichst $CO_2$-neutral arbeiten und dabei möglichst effizient und energiesparend sind, ist daher sehr groß. Zudem besteht vermehrt der Wunsch der Kunden nach sogenanntem "grünem Kalk". "Grüner Kalk" wird dabei als Synonym für einen klimaneutral hergestellten gebrannten Kalk verwendet.

Stand der Technik sind in diesem Zusammenhang beispielsweise klassische Schachtöfen, denen eine $CO_2$-Abscheidung nachgeschaltet ist. Zur Abtrennung des $CO_2$ aus den Abgasen ist beispielhaft die Aminwäsche technisch am ausgereiftesten. Allerdings müssen die Amine in einer dem Schachtofen nachgeschalteten zusätzlichen Chemiefabrik hergestellt werden, was einen umfangreichen wirtschaftlichen und personellen Aufwand bedeutet. Die alternative Nutzung von Festbettreaktoren oder Calcium-Looping-Verfahren ist zwar bereits bekannt, wurde aber im industriellen Maßstab bisher nicht erprobt bzw. umgesetzt. Allgemein haben alle Verfahren einen sehr hohen Energiebedarf, um das $CO_2$ in den Abgasen eines Schachtofens aufzukonzentrieren.

Bekannt sind weiterhin Verfahren, bei denen der Verbrennungsprozess im Schachtofen mit reinem Sauerstoff anstelle von Luft durchgeführt wird [DE 10 2013 010 909 B3, Maerz EcoKiln]. In diesen Verfahren wird ein Teil des beim Kalkbrennen entstehenden $CO_2$ dem Schachtofen zusammen mit dem Sauerstoff wieder zugeführt. Der Betrieb eines solchen Schachtofens ist jedoch aufgrund des Bedarfs an Sauerstoff preisintensiv. Ein Verfahren, in dem in einem Schachtofen neben einem Brennstoff $CO_2$ und Sauerstoff eingebracht werden, offenbart ebenfalls die JP 2009/161391 A.

Gebrannter Kalk wird in zahlreichen industriellen Anwendungen benötigt, unter anderem in der Stahlindustrie. Zur Bereitstellung von gebranntem Kalk in der Stahlindustrie ist ein Verfahren bekannt, welches $CO_2$ als Wärmeträgermedium in einem Schachtofen nutzt [Yang et al.]. Der Schachtofen wird in diesem Verfahren in eine Vorwärmzone, eine Reaktionszone, eine Trennzone und eine Kühlzone unterteilt. Der Verbrennungsprozess und damit der Energieeintrag im Verfahren sind nicht im Schachtofen, sondern außerhalb angeordnet. Das gesamte im Schachtofen vorhandene $CO_2$ wird oberhalb der Vorwärmzone mit einer Temperatur von ca. 700 °C abgezogen und in ein Regeneratorsystem geleitet. Im Regeneratorsystem wird das $CO_2$ auf die benötigte Prozesstemperatur erhitzt und anschließend an der Grenze der Trennzone zur Reaktionszone in den Schachtofen eingebracht.

Ein Regenerator ist prinzipiell ein Wärmeübertrager, der abwechselnd von Gas einer höheren Temperatur und von einem Gas einer niedrigeren Temperatur durchströmt wird. Beim Durchströmen des Regenerators mit dem Gas höher Temperatur wird die Wärme in einem Speichermedium zwischengespeichert (Beladen des Regenerators). Anschließend gibt das Speichermedium die Wärme an das Gas mit der niedrigeren Temperatur ab, wenn dieses den Regenerator durchströmt (Entladen des Regenerators). Der Regenerator wird im Allgemeinen im Gegenstromprinzip be- und entladen. Dabei durchströmt das Gas zum Beladen des Regenerators diesen vom Regeneratorkopf aus in Richtung des Regeneratorfußes und das Gas zum Entladen des Regenerators durchströmt diesen genau in der umgekehrten Richtung, vom Regeneratorfuß in Richtung des Regeneratorkopfes.

Als Prozessgas wird in den Verfahren des Standes der Technik Schwachgas genutzt, dieses steht in der Kalkindustrie als Prozessgas jedoch nicht ohne weiteres zur Verfügung. In der Kalkindustrie werden hochkalorische Brennstoffe, wie Erdgas oder Braunkohlestaub eingesetzt. Das Schwachgas wird durch einen Vorwärmer geleitet und erhitzt, dies kann jedoch nicht auf die hochkalorischen Brennstoffe der Kalkindustrie angewendet werden. Das von Yang et al. beschriebene Verfahren kann daher in der Kalkindustrie nicht ohne einen großen Aufwand eingesetzt werden, zumindest müsste zusätzlich ein Schwachgas als Brennstoff zur Verfügung gestellt werden. Wesentlich vorteilhafter wäre es ein Verfahren und eine Vorrichtung zum Brennen von Kalk oder Dolomit zur Verfügung zu haben, welches direkt in der Kalkindustrie angewendet werden kann, ohne das zusätzliche Brennstoffe zur Verfügung gestellt werden müssen.

Die US 2020/0048146 A1 offenbart ein System ähnlich dem von Yang et al. mit den bereits beschriebenen Nachteilen.

In den aus dem Stand der Technik bekannten Verfahren, wird darüber hinaus das im Schachtofen strömende $CO_2$ am Ofenkopf abgezogen. Das Wärmekapazitätsstromverhältnis $\Omega$, das sich aus den Wärmekapazitätsströmen zweier Stoffströme in einem Wärmeübertrager definiert zu

$$\Omega = m_1 \cdot c_1 / (m_2 \cdot c_2), \qquad (2)$$

wobei m der Massenstrom und c die spezifische Wärmekapazität sind, gestaltet sich in der Vorwärmzone als äußerst ungünstig. In der Vorwärmzone ist der Wärmekapazitätsstrom des Kalksteins wesentlich geringer als der Wärmekapazitätsstrom des $CO_2$, sodass im Resultat das $CO_2$ mit einer relativ hohen Temperatur von ca. 700 °C aus dem Schachtofen abgezogen wird. Diese hohe Temperatur führt zu einem entsprechend hohen Wärmeverlust beim Abziehen des überschüssigen $CO_2$ aus dem Gesamtprozess. Hierdurch sinkt die Energieeffizienz des Verfahrens. Typischerweise liegt das Wärmekapazitätsstromverhältnis von $CO_2$ zu Kalkstein bei den aus dem Stand der Technik bekannten Verfahren im Bereich von 2,5 bis 4 [Yang et al.].

Ausgehend vom Stand der Technik ist es daher die Aufgabe der Erfindung, eine Vorrichtung zur Verfügung zu stellen, mit der die Energieeffizienz eines Schachtofens beim Brennen von Kalk oder Dolomit erhöht wird, wobei die aus dem Stand der Technik bekannten Nachteile behoben werden. Darüber hinaus soll das aus der Entsäuerung des Kalksteins austretende $CO_2$ hochkonzentriert abgeschieden und weiteren Verwendungen oder geeigneten Lagerstätten zugeführt werden können.

Hierfür stellt die Erfindung eine Vorrichtung gemäß dem Anspruch 1 und ein Verfahren gemäß dem Anspruch 7 zur Verfügung.

**Detaillierte Beschreibung**

Die im Folgenden beschriebenen Merkmale treffen in gleicher Weise für die erfindungsgemäße Vorrichtung und für das erfindungsgemäße Verfahren zu.

Die Erfindung stellt eine Vorrichtung zur Herstellung von gebranntem Kalk oder Dolomit zur Verfügung. Die Vorrichtung umfasst einen Schachtofen und mindestens eine Wärmvorrichtung. Der Schachtofen weist eine Vorwärmzone, eine Reaktionszone, eine Trennzone und eine Kühlzone auf. Zu Beginn der Vorwärmzone wird das carbonathaltige Gestein, im Folgenden als Kalkstein bezeichnet, mit einer Temperatur $T_{KS}$ und einem Massenstrom $m_{KS}$ in den Schachtofen eingebracht. Mit carbonathaltigem Gestein ist im Sinne der Erfindung Rohgestein in Form von Kalkstein oder Dolomitgestein gemeint. Dolomitgestein $CaMg[CO_3]_2$ ist auch bekannt als Dolomitspat, Rautenspat oder Perlspat. Alles im Folgenden für Kalkstein Beschriebene, trifft genauso auf Dolomitgestein zu, wenn nicht anders gekennzeichnet. Insbesondere auch die Angabe von Massenströmen und Temperaturen. Das entsäuerte carbonathaltige Gestein, welches nach dem Brennvorgang erhalten wird, wird im Fall von Kalkstein als Ausgangsstoff als Kalk, gebrannter Kalk bzw. Branntkalk und im Fall von Dolomitgestein als Ausgangsstoff als gebrannter Dolomit oder Dolomit bezeichnet. Alles im Folgenden für Kalk und gebrannten Kalk bzw. Branntkalk beschriebene, trifft genauso auf gebrannten Dolomit bzw. Dolomit zu, wenn nicht anders gekennzeichnet.

Üblicherweise entspricht die Temperatur des Kalksteins $T_{KS}$ der Umgebungstemperatur. Der Massenstrom $m_{KS}$ des Kalksteins liegt typischerweise im Bereich von 1,65 bis 1,85 kg/kg$_{Kalk}$ bzw. kg/kg$_{Dolomit}$, kann aber auch im Bereich von oberhalb 1,85 kg/kg bei sehr hohen $MgCO_3$-Gehalten im Ausgangsgestein bzw. unterhalb 1,65 kg/kg bei einem niedrigen Carbonatanteil ($MgCO_3$- bzw. $CaCO_3$-Gehalt) im Ausgangsgestein bzw. hohen Anteilen ungebranntem Material im Endprodukt Kalk liegen. In der Vorwärmzone wird der Kalkstein vom durch das im Schachtofen strömende $CO_2$ erwärmt. Mit $CO_2$ ist im Sinne der Erfindung ein Gasgemisch mit einer $CO_2$-Konzentration von über 75 %, bevorzugt von über 85 %, besonders bevorzugt von über 95 % gemeint. In der Vorwärmzone wird der Kalkstein bis auf die erforderliche Entsäuerungstemperatur erwärmt, die im Fall einer nahezu reinen $CO_2$ Atmosphäre in Abhängigkeit des Rohsteins im Bereich von 900 °C liegt. Eine Entsäuerungsreaktion findet in der Vorwärmzone noch nicht statt. Eine Ausnahme bildet Dolomitgestein, dessen $MgCO_3$-Anteil bereits bei niedrigeren Temperaturen entsäuert.

An die Vorwärmzone schließt sich die Reaktionszone an, in der dem Kalkstein weiter Wärme zugeführt wird und dieser entsäuert wird. Die nahezu gesamte Entsäuerungsreaktion des Kalksteins findet in der Reaktionszone statt, so dass am Ende der Reaktionszone bereits gebrannter Kalk vorliegt. In der Reaktionszone herrschen Temperaturen oberhalb 900 °C.

An die Reaktionszone schließt sich die Trennzone an. An der Grenze der Trennzone zur Reaktionszone ist eine erste Zuführvorrichtung angeordnet, durch die auf die Prozesstemperatur $T_1$ erwärmtes $CO_2$ mit einem Massenstrom $m_1$ in den Schachtofen eingebracht wird. Das $CO_2$ mit der Temperatur $T_1$ liefert den nötigen Energieeintrag, um eine Entsäuerungsreaktion des Kalksteins im Schachtofen zu ermöglichen. Ein Verbrennungsprozess innerhalb des Schachtofens ist damit vorteilhafterweise nicht notwendig.

Die Temperatur $T_1$ liegt im Bereich von 950 und 1500 °C, bevorzugt im Bereich von 1000 und 1400 °C, besonders bevorzugt im Bereich von 1050 und 1350 °C. Der Massenstrom $m_1$ ist größer 4 kg/kg$_{Kalk}$.

An die Trennzone schließt sich die Kühlzone an. Am Ende der Kühlzone wird durch eine zweite Zuführvorrichtung Kühlluft zum Kühlen des Kalks mit einer Temperatur $T_{Luft}$ und einem Massenstrom $m_{Luft}$ in den Schachtofen eingebracht. Die Kühlluft umströmt den gebrannten Kalk und kühlt diesen. Die Temperatur $T_{Luft}$ liegt im Bereich der Umgebungstemperatur. Der Massenstrom der Kühlluft $m_{Luft}$ beträgt mindestens 0,7 kg/kg$_{Kalk}$.

Erfindungsgemäß weist der Schachtofen zwischen der Kühlzone und der Trennzone eine erste Abzugsvorrichtung auf. Durch diese Abzugsvorrichtung wird die erwärmte Kühlluft mit der Temperatur $T_5$ mit einem Massenstrom $m_5$ aus dem Schachtofen abgezogen. Die erste Abzugsvorrichtung trennt damit die Kühlzone erfindungsgemäß von der Trennzone. Die Kühlzone sollte dabei ausreichend groß gewählt werden, so dass eine hinreichende Kühlung des gebrannten Kalks gewährleistet werden kann. Dies ist eine fachübliche Maßnahme und daher aus dem Stand der Technik bereits bekannt. Die Temperatur $T_5$ liegt im Bereich von 100 und 1200 °C, bevorzugt im Bereich von 500 und 1000 °C, besonders bevorzugt im Bereich von 600 und 900 °C. Der Massenstrom $m_5$ ist idealerweise gleich dem Massenstrom $m_{Luft}$. Wird Kühlluft Richtung Reaktionszone gezogen und mit dem $CO_2$ am Ofenkopf abgesaugt, ist $m_5 < m_{Luft}$. Gelangt hingegen ein Teil des $CO_2$ aus der Reaktionszone in den Bereich der Kühlluftabsaugung und wird zusammen mit der Kühlluft abgesaugt, ist $m_5 > m_{Luft}$. Der Ofenkopf des Schachtofens ist der Teil, an dem der Schachtofen mit dem Kalkstein beaufschlagt wird.

Die Trennzone dient der physikalischen Trennung der $CO_2$-Atmosphäre in der Reaktionssowie Vorwärmzone und der Luftatmosphäre in der Kühlzone. Am Ende der Kühlzone befindet sich eine Vorrichtung zum Austragen des gebrannten Kalks. Hierdurch wird der gekühlte gebrannte Kalk mit der Temperatur $T_{Aus}$ und dem Massenstrom $m_{Aus}$ aus dem Schachtofen ausgetragen. Vorrichtungen zum Austragen sind dem Fachmann bekannt und sind beispielsweise Schubtische, durch die der gebrannte Kalk aus dem Schachtofen ausgetragen wird. Die Temperatur $T_{Aus}$ liegt typischerweise im Bereich von 20 bis höchstens 200 °C.

Erfindungsgemäß weist der Schachtofen weiterhin eine zweite Abzugsvorrichtung für $CO_2$ oberhalb der Vorwärmzone am Ofenkopf und eine dritte Abzugsvorrichtung für $CO_2$ oberhalb der Reaktionszone auf. Die dritte Abzugsvorrichtung kann daher erfindungsgemäß am Übergang der Vorwärmzone zur Reaktionszone angeordnet sein oder aber vor dem Übergang zur Reaktionszone in einem Bereich der Vorwärmzone. In einer bevorzugten Ausführungsform der Erfindung ist die dritte Abzugsvorrichtung für $CO_2$ an der Grenze der Reaktionszone zur Vorwärmzone angeordnet. Wie bereits beschrieben, ist mit $CO_2$ im Sinn der Erfindung ein Gasgemisch mit einer $CO_2$-Konzentration von über 75 %, bevorzugt von über 85 %, besonders bevorzugt von über 95 % umfasst.

In einer weiteren bevorzugten Ausführungsform der Erfindung ist die dritte Abzugsvorrichtung oberhalb der Reaktionszone derart angeordnet, dass die Temperatur $T_3$ des durch die dritte Abzugsvorrichtung abgezogenen $CO_2$ im Bereich von 400 und 1000 °C, bevorzugt im Bereich von 600 und 1000 °C, besonders bevorzugt im Bereich von 800 und 900 °C liegt.

In einer weiteren Ausführungsform der vorliegenden Erfindung werden durch die Positionen der Abzugs- und Zuführvorrichtungen die Zonen des Schachtofens festgelegt. Zwischen der zweiten Abzugsvorrichtung und der dritten Abzugsvorrichtung erstreckt sich die Vorwärmzone, zwischen der dritten Abzugsvorrichtung und der ersten Zuführvorrichtung erstreckt sich die Reaktionszone, zwischen der ersten Zuführvorrichtung und der ersten Abzugsvorrichtung erstreckt sich die Trennzone und zwischen der ersten Abzugsvorrichtung und der zweiten Zuführvorrichtung erstreckt sich die Kühlzone.

Durch diese Ausgestaltung, kann ein Teil A des $CO_2$ mit einer Temperatur $T_3$ und einem Massenstrom $m_3$ oberhalb der Reaktionszone durch die dritte Abzugsvorrichtung aus dem Schachtofen abgezogen werden. Durch den Abzug von $CO_2$ durch die dritte Abzugsvorrichtung wird der Massenstrom des $CO_2$ in der Vorwärmzone des Schachtofens verringert.

Die Temperatur $T_3$ liegt im Bereich von 400 und 1000 °C, bevorzugt im Bereich von 600 und 1000 °C, besonders bevorzugt im Bereich von 800 und 900 °C. Der Massenstrom $m_3$ ist in einer bevorzugten Ausführungsform der vorliegenden Erfindung so zu wählen, dass das im Ofen verbleibende $CO_2$ ein Kapazitätsstromverhältnis von $CO_2$ zu Kalkstein in der Vorwärmzone im Bereich von 1 bis 2, bevorzugt im Bereich von 1 bis 1,6, besonders bevorzugt im Bereich von 1 bis 1,2 ergibt.

Das im Ofen verbliebene $CO_2$ kann mit einer Temperatur $T_2$ und dem Massenstrom $m_2$ am Beginn der Vorwärmzone durch die zweite Abzugsvorrichtung aus dem Schachtofen abgezogen werden.

Von dem durch die zweite Abzugsvorrichtung abgezogenem $CO_2$ kann eine Teil B mit einem Massenstrom $m_B$ in der Abzugsvorrichtung weitergeführt werden, während ein Teil C mit der Temperatur $T_2$ und einem Massenstrom mc aus dem Prozess abgezogen wird.

Die Temperatur $T_2$ liegt im Bereich von 80 und 700 °C, bevorzugt im Bereich von 80 und 400 °C, besonders bevorzugt im Bereich von 80 und 250 °C. Der Massenstrom $m_2$ oberhalb von 1,7 $kg/kg_{Kalk}$, bevorzugt im Bereich von 1,7 bis 3,4 $kg/kg_{Kalk}$, besonders bevorzugt im Bereich von 1,7 bis 2,1 $kg/kg_{Kalk}$.

Der Massenstrom $m_B$ liegt im Bereich oberhalb von 1 $kg/kg_{Kalk}$, bevorzugt im Bereich von 1 bis 1,9 $kg/kg_{Kalk}$, besonders bevorzugt im Bereich von 1 bis 1,4 $kg/kg_{Kalk}$.

Der Massenstrom mc ist gleich dem Massenstrom an $CO_2$, der bei der Entsäuerung aus dem Kalkstein austritt und liegt in der Größenordnung von 0,75 $kg/kg_{Kalk}$, bevorzugt im Bereich von 0,7 bis 0,85 $kg/kg_{Kalk}$.

Durch das verringerte Wärmekapazitätsstromverhältnis in der Vorwärmzone im Vergleich zu den Verfahren nach dem Stand der Technik ist die Austrittstemperatur $T_2$ des $CO_2$ am Ofenkopf deutlich niedriger, wodurch sich der Wärmeverlust über das auszuschleusende $CO_2$ ($m_c$) verringert und damit die Energieeffizienz der Schachtofenanlage gesteigert wird.

Erfindungsgemäß mündet die dritte Abzugsvorrichtung in die zweite Abzugsvorrichtung. Nachdem das $CO_2$ der dritten Abzugsvorrichtung in die zweite Abzugsvorrichtung eingeleitet wurde, fließt das $CO_2$ mit der Temperatur $T_8$ und dem Massenstrom $m_8$ weiter in die mindestens eine Wärmvorrichtung.

Die Temperatur $T_8$ liegt im Bereich von 500 bis 1000 °C, bevorzugt im Bereich von 600 bis 900 °C, besonders bevorzugt im Bereich von 650 bis 900 °C. Der Massenstrom $m_8$ ist gleich $m_1$.

Die vorliegende Erfindung weist weiterhin mindestens eine Wärmvorrichtung auf. Erfindungsgemäß mündet die dritte Abzugsvorrichtung außerhalb des Schachtofens in die zweite Abzugsvorrichtung, bevor die zweite Abzugsvorrichtung in die mindestens eine Wärmvorrichtung mündet. Die erste Zuführvorrichtung des Schachtofens ist erfindungsgemäß wiederum von der mindestens einen Wärmvorrichtung zum Schachtofen ausgebildet, das heißt sie verbindet die mindestens eine Wärmvorrichtung mit dem Schachtofen. Das über die zweite und dritte Abzugsvorrichtung abgezogene $CO_2$ wird damit erfindungsgemäß zumindest teilweise in die mindestens eine Wärmvorrichtung geleitet. Dort wird das $CO_2$ auf die Temperatur Tw erwärmt und über die erste Zuführvorrichtung dem Schachtofen zugeführt. Das $CO_2$ wird damit in der vorliegenden Erfindung zumindest teilweise in einem Kreislauf geführt. Das $CO_2$ welches nicht im Kreislauf geführt wird, wird wie bereits beschrieben, aus dem Prozess abgezogen. Eine Emission von verdünntem $CO_2$ aus dem Schachtofen in die Atmosphäre kann damit vorteilhafterweise vermieden werden. Das abgezogene $CO_2$ steht für weitere Anwendungen zur Verfügung. Die Umweltbelastung wird entsprechend reduziert und eine wirtschaftliche Kosteneinsparung durch die Verringerung von $CO_2$-Abgaben erreicht.

Die Temperatur Tw am Austritt der mindestens einen Wärmvorrichtung ist erfindungsgemäß gleich der Eintrittstemperatur $T_1$ des $CO_2$ in den Schachtofen.

Erfindungsgemäß ist die mindestens eine Wärmvorrichtung ein Regeneratorsystem, ein elektrisches Heizsystem oder eine Kombination dieser. In einer Ausführungsform wird ausschließlich ein elektrisches Heizsystem verwendet. Dies hat den Vorteil, dass der Verbrennungsprozess entfällt, der für den Wärmeeintrag innerhalb eines Regeneratorsystems notwendig ist. Dadurch entfallen die Abgase, die durch den Verbrennungsprozess entstehen.

In einer weiteren Ausführungsform kommt eine Kombination eines elektrischen Heizsystem und eines Regeneratorsystems zum Einsatz, das bevorzugt mindestens zwei Regeneratoren aufweist. Mindestens zwei Regeneratoren sind notwendig, damit während der Be- und Entladevorgänge zwischen ihnen gewechselt werden kann und so ein kontinuierlicher Prozessablauf gewährleistet werden kann. Hierbei wird das $CO_2$ zunächst durch das Regeneratorsystem erwärmt und anschließend in das elektrische Heizsystem geleitet, in welchem dem $CO_2$ weitere Wärme zugeführt wird. Diese Ausführungsform hat den Vorteil, dass die im Regeneratorsystem verwendeten Regeneratoren nicht auf die Prozesstemperatur, die für das Brennen des Kalks oder des Dolomits notwendig ist, aufgeheizt werden müssen. Damit können auch Speichermaterialien in den Regeneratoren verwendet werden, die für Temperaturen unterhalb der Prozesstemperatur im Schachtofen geeignet sind. Mit der Prozesstemperatur für das Brennen des Kalks oder des Dolomits bzw. der Prozesstemperatur im Schachtofen wird in diesem Fall die Temperatur beschrieben, die das $CO_2$ bei der Zuführung in den Schachtofen über die erste Zuführvorrichtung aufweisen muss, um genügend Energie in den Schachtofen einzubringen, damit das Brennen des Kalks oder Dolomits durchgeführt werden kann.

Umfasst die mindestens eine Wärmvorrichtung ein Regeneratorsystem, so weist das Regeneratorsystem bevorzugt mindestens zwei Regeneratoren, einen ersten Vorwärmer, eine Zuführung für Frischluft und eine Zuführung für einen Brennstoff auf. Das Regeneratorsystem kann aber auch mehr als zwei Regeneratoren aufweisen, beispielsweise drei.

In dieser Ausführungsform wird Frischluft mit einer Temperatur $T_F$ und einem Massenstrom $m_F$ im ersten Vorwärmer auf eine Temperatur $T_{FV}$ erwärmt und als Verbrennungsluft für die Verbrennung mit einem Brennstoff genutzt. Erfindungsgemäß ist der Brennstoff ausgewählt aus kohlenstoffhaltigen Brennstoffen und/ oder Wasserstoff. In einer bevorzugten Ausführungsform ist der Brennstoff ein gasförmiger Brennstoff. Die Verwendung eines gasförmigen Brennstoffes hat den Vorteil, dass ein Ascheeintrag in den Regenerator beim Beladen vermieden wird.

In einer Ausführungsform der vorliegenden Erfindung findet die Verbrennung des Brennstoffs im Regeneratorkopf statt. In einer weiteren Ausführungsform der Erfindung findet die Verbrennung des Brennstoffes in einer dem Regeneratorkopf vorgeschalteten Brennkammer statt.

Für die Verbrennung dient besonders bevorzugt ein Brennstoff ausgesucht aus der Gruppe enthaltend Erdgas, Biogas, Wasserstoff und vergaste feste Brennstoffe, wie beispielsweise Holzgas. Die bei der Verbrennung entstehenden Verbrennungsgase mit einer Temperatur $T_7$ werden durch den Regenerator geleitet, um das Speichermaterial des Regenerators auf die Temperatur $T_{RK}$ am Regeneratorkopf bzw. $T_{RF}$ am Regeneratorfuß zu erhitzen und damit zu Beladen. Nach dem Durchlaufen des Regenerators werden die Verbrennungsgase als Abgase abgeleitet. Die Abgase weisen eine Temperatur $T_{Abg}$ auf.

Die Temperatur $T_{Abg}$ liegt im Bereich von 500 bis 1200 °C, bevorzugt im Bereich von 650 bis 1100 °C, besonders bevorzugt im Bereich von 800 bis 1000 °C. Vorteilhafterweise werden die Abgase durch den ersten Vorwärmer geleitet, um dort die Frischluft auf die Temperatur $T_{FV}$ zu erwärmen. Damit kann über die Restwärme der Abgase die Frischluft energieeffizient vorgewärmt werden.

Durch das Zuführen der Frischluft mit dem Massenstrom $m_F$ als Verbrennungsluft kann der Massenstrom des Verbrennungsgases, das nach der Verbrennung der Frischluft mit dem Brennstoff entsteht, geregelt werden. Bevorzugt, wird der Massenstrom der Verbrennungsgase, der durch das Regeneratorsystem strömt, derart geregelt, dass er ungefähr gleich dem Massenstrom $m_8$ des $CO_2$ ist, das beim Entladen durch das Regeneratorsystem strömt. Auf diese Weise kann das Wärmekapazitätsstromverhältnis zwischen Verbrennungsgas, das das Regeneratorsystem beim Beladen durchströmt und $CO_2$, dass das Regeneratorsystem beim Entladen durchströmt geregelt werden. Bevorzugt liegt das mittlere Wärmekapazitätsstromverhältnis von Verbrennungsgas und $CO_2$ im Regeneratorsystem zwischen 0,7 und 1,3, bevorzugt zwischen 0,9 und 1,1, besonders bevorzugt ist das mittlere Wärmekapazitätsstromverhältnis 1. Dies führt dazu, dass der Regenerator im Regeneratorsystem gleichmäßiger beladen wird und die Temperaturdifferenz nach dem Beladen zwischen Regeneratorkopf und Regeneratorfuß geringer ist als bei den aus dem Stand der Technik genutzten Verfahren. Das Speichermaterial des Regenerators im Regeneratorsystem kann damit effektiver genutzt werden. Dies führt vorteilhafterweise dazu, dass die Temperaturdifferenz zwischen der Temperatur $T_{RK}$ des Speichermaterials im Regeneratorkopf und der Temperatur Tw des $CO_2$ beim Verlassen des Regenerators am Regeneratorkopf wesentlich geringer ist als bei den aus dem Stand der Technik bekannten Verfahren. Vorteilhafterweise werden dadurch die thermischen Spannungen, die im Material des Regenerators, insbesondere am Regeneratorkopf auftreten, wesentlich verringert. Die Belastung des Materials des Regenerators wird reduziert und dessen Lebensdauer bzw. Wartungsinterval im Vergleich zu den aus dem Stand der Technik bekannten Regeneratoren erhöht (vgl. Yang et al.).

Die Temperatur $T_F$ liegt im Bereich der Umgebungstemperatur. Der Massenstrom $m_F$ hängt maßgeblich von dem Massenstrom des $CO_2$ ab, der beim Entladen durch das Regeneratorsystem geleitet wird und ist größer 2,6 kg/kg$_{Kalk}$.

Die Temperatur $T_{FV}$ liegt im Bereich von 100 bis 1000 °C, bevorzugt im Bereich von 500 bis 1000 °C, besonders bevorzugt im Bereich von 700 bis 900 °C.

In einer weiteren Ausführungsform der vorliegenden Erfindung ist die erste Abzugsvorrichtung mit dem Regeneratorsystem verbunden. In diesem Fall kann der im Vorwärmer auf die Temperatur $T_{FV}$ erwärmten Frischluft zusätzlich zumindest ein Teil der durch die erste Abzugsvorrichtung abgezogenen Kühlluft mit der Temperatur $T_5$ zugeführt werden. In einer Ausführungsform wird die gesamte abgezogene Kühlluft mit der Temperatur $T_5$ der im ersten Vorwärmer erwärmten Frischluft zugeführt. Das Gasgemisch dient dann als Verbrennungsluft bei der Verbrennung des Brennstoffs, wobei der Brennstoff ausgewählt ist aus kohlenstoffhaltigen Brennstoffen und/ oder Wasserstoff, insbesondere ausgewählt ist aus der Gruppe aufweisend Erdgas, Biogas, Wasserstoff und vergaste feste Brennstoffe, wie beispielsweise Holzgas. Die bei der Verbrennung entstehenden Verbrennungsgase mit einer Temperatur $T_7$ werden durch einen Regenerator geleitet und heizen diesen auf die Temperatur $T_{RK}$ am Regeneratorkopf bzw. $T_{RF}$ am Regeneratorfuß auf und beladen den Regenerator damit. Die Abgase, die den Regenerator verlassen, können wie bereits beschrieben zum Erwärmen der Frischluft im ersten Vorwärmer genutzt werden.

Unter Erdgas im Sinne der Erfindung wird sowohl L-Gas (Low calorific gas) als auch H-Gas (High calorific gas) verstanden. Biogas beschreibt ein energiereiches Gasgemisch, das bei der natürlichen Zersetzung von organischem Material unter Luftabschluss entsteht. Holzgas ist ein Gas, welches durch die Vergasung von Holz gewonnen wird.

Unabhängig davon, ob nur Frischluft oder ein Gasgemisch aus Frischluft und der aus dem Schachtofen durch die erste Abzugsvorrichtung abgezogenen Kühlluft für die Verbrennung dient, wird durch die Verwendung der oben genannten Brennstoffe eine Temperatur $T_7$ des Verbrennungsgases erreicht, die eine etwas höhere Temperatur als das $CO_2$ am Austritt des Regeneratorsystems ($T_W$) aufweist und zwischen 1000 und 1600 °C liegt, bevorzugt zwischen 1100 und 1500 °C, besonders bevorzugt zwischen 1150 und 1450 °C. Das Speichermaterial des mindestens einen Regenerators wird erfindungsgemäß auf die Temperatur $T_{RK}$ am Regeneratorkopf und $T_{RF}$ am Regeneratorfuß erwärmt.

Die Temperatur $T_{RK}$ liegt zwischen $T_W$ und $T_7$. Die Temperatur $T_{RF}$ liegt auf einem etwas höheren Temperaturniveau als das $CO_2$ am Eintritt in das Regeneratorsystem ($T_8$).

In einer Ausführungsform der vorliegenden Erfindung, ist die zweite Abzugsvorrichtung vor dem Einmünden der dritten Abzugsvorrichtung direkt mit der ersten Zuführvorrichtung über eine **Kurzschlussleitung** verbunden. Dies ermöglicht es einen Teil D mit dem Massenstrom $m_D$ des durch die zweite Abzugsvorrichtung abgezogenen $CO_2$ mit der Temperatur $T_2$ mit dem $CO_2$ zu mischen, welches über die erste Zuführeinrichtung in den Schachtofen eingebracht wird. Hierdurch wird es ermöglicht, dass die Temperatur $T_1$ unabhängig von der verwendeten mindestens einen Wärmvorrichtung geregelt werden kann. Kann durch die verwendete mindestens eine Wärmvorrichtung keine konstante Temperatur des $CO_2$ beim Verlassen des ersten Wärmsystems garantiert werden, so kann dies vorteilhafterweise durch die Regulierung des Massenstroms $m_D$, der durch die Kurzschlussleitung zugeführt wird, ausgeglichen werden.

Der Massenstrom $m_D$ ist deutlich niedriger als $m_1$ und liegt im Bereich von kleiner 1 kg/kg$_{Kalk}$.

In einer weiteren Ausführungsform der vorliegenden Erfindung steht die erste Abzugsvorrichtung mit der zweiten Abzugsvorrichtung in Form eines **zweiten Vorwärmers** in Kontakt. Bevorzugt ist der zweite Vorwärmer derart positioniert, dass die zweite Abzugsvorrichtung den Vorwärmer passiert, bevor die dritte Abzugsvorrichtung in die zweite Abzugsvorrichtung einmündet. Diese Ausführungsform ermöglicht es, dass durch die erste Abzugsvorrichtung abgezogenen erwärmte Kühlluft mit der Temperatur $T_5$ zumindest teilweise in den Vorwärmer geleitet wird und dort zur Erwärmung eines Teils des durch die zweite Abzugsvorrichtung abgezogenen $CO_2$ genutzt wird. Das $CO_2$, welches den zweiten Vorwärmer durchströmt, wird von der Temperatur $T_2$ auf die Temperatur $T_{2V}$ erwärmt. Der Vorwärmer ermöglicht die Wärmeübertragung zwischen den beiden aneinander vorbeiströmenden Gasströmen.

Diese Ausführungsform ermöglicht eine weitere Energieeinsparung, da die Wärme, der durch die erste Abzugsvorrichtung abgezogenen Kühlluft, zur Erwärmung des im Kreislauf laufenden $CO_2$ genutzt werden kann. Des Weiteren besteht der Vorteil, dass prozessintern Wärme aus der erwärmten Kühlluft zurückgewonnen werden kann, ohne dass diese Kühlluft als Verbrennungsluft in das Regeneratorsystem geleitet wird und zu einem unerwünschten Staubeintrag führt.

Die Temperatur $T_{2V}$ ist durch die Wärmerückgewinnung größer als $T_2$ und liegt im Bereich von 200 und 1000 °C, bevorzugt im Bereich von 400 und 900 °C, besonders bevorzugt im Bereich von 500 und 800 °C

Unter **Abzugsvorrichtung** im Sinn der vorliegenden Erfindung ist eine Vorrichtung zu verstehen, die mindestens ein Mittel zum Abziehen eines Gases aufweist und mindestens eine Leitung, um das abgezogene Gas weiterzuleiten. Mittel zum Abziehen von Gasen sind beispielsweise Absaugvorrichtungen wie Gebläse, insbesondere Heißgasgebläse. Bevorzugt ist der Massenstrom des Gases, das abgezogen wird, regelbar.

Unter **Zuführvorrichtung** im Sinne der vorliegenden Erfindung ist eine Vorrichtung zu verstehen, die mindestens ein Mittel zum Einleiten eines Gases in einen Behälter, insbesondere in einen Schachtofen aufweist. Die Zuführvorrichtung umfasst entsprechend auch mindestens eine Leitung zum Weiterleiten des Gases. Bevorzugt ist der Massenstrom des Gases, das eingeleitet wird, regelbar.

Die Leitungen der Zuführ- und/oder Abzugsvorrichtungen weisen weiterhin in einer bevorzugten Ausführungsform Filter, Gebläse und Ventile auf. In einer bevorzugten Ausführungsform weisen insbesondere die Abzugsvorrichtungen Filter zum Entstauben des abgezogenen $CO_2$ auf. Als Filter werden hier allgemein Vorrichtungen zur Entstaubung von Gasen bezeichnet. Dies können beispielsweise Gewebefilter oder auch Heißgaszyklone sein. Ventile können zur Regelung, Absperrung, Aufteilung und/oder Umleitung der Massenströme genutzt werden. Gebläse werden eingesetzt, um den Gasfluss in den Leitungen zu erzeugen.

Um die Prozessparameter des Brennvorgangs zu überwachen, kann die Vorrichtung an mindestens einer Stelle einen Temperatursensor und/oder einen Drucksensor aufweisen. Bevorzugt weist die Vorrichtung an verschiedenen geeigneten Stellen Temperatursensoren und/oder Drucksensoren auf. Diese können zum Beispiel in den Leitungen der Zuführvorrichtungen und/oder in den Leitungen der Abzugsvorrichtungen positioniert sein. Vorzugsweise weist die Vorrichtung Temperatursensoren und/oder Drucksensoren an den Stellen auf, die notwendig sind, um eine Steuerung und/oder Überwachung der erfindungsgemäßen Vorrichtung zu ermöglichen.

Die Vorrichtung kann entsprechend in einer Ausführungsform eine Steuerung umfassen, mit der die Prozessparameter (Temperatur, Druck, Massenströme) überwacht und gesteuert werden können.

Alle beschriebenen Merkmale der Erfindung können erfindungsgemäß untereinander kombiniert werden.

Weiterhin stellt die Erfindung ein **Verfahren zur Herstellung von gebranntem Kalk oder Dolomit** in einer Vorrichtung aufweisend

- einen Schachtofen aufweisend eine Vorwärmzone, eine Reaktionszone, eine Trennzone und eine Kühlzone;
- eine erste Zuführvorrichtung an der Grenze der Trennzone zur Reaktionszone;
- eine erste Abzugsvorrichtung an der Grenze der Kühlzone zur Trennzone;
- eine zweite Abzugsvorrichtung für $CO_2$ am Beginn der Vorwärmzone;
- mindestens eine Wärmvorrichtung;
- eine dritte Abzugsvorrichtung für $CO_2$ oberhalb der Reaktionszone; wobei
- die dritte Abzugsvorrichtung außerhalb des Schachtofens vor der mindestens einen Wärmvorrichtung in die zweite Abzugsvorrichtung mündet;
- die zweite Abzugsvorrichtung in die mindestens eine Wärmvorrichtung mündet; und
- die erste Zuführvorrichtung von der mindestens einen Wärmvorrichtung zum Schachtofen ausgebildet ist;

zur Verfügung. Das Verfahren ist dadurch gekennzeichnet, dass

a) Kalkstein oder Dolomitgestein in die Vorwärmzone des Schachtofens eingebracht wird;
b) vorgewärmtes $CO_2$ mit einer Temperatur $T_1$ und einem Massenstrom $m_1$ zwischen Trennzone und Reaktionszone durch die erste Zuführvorrichtung in den Schachtofen eingebracht wird;
c) ein Teil A des $CO_2$ mit dem Massenstrom $m_3$ und einer Temperatur $T_3$ oberhalb der Reaktionszone durch die dritte Abzugsvorrichtung aus dem Schachtofen abgezogen wird;
d) das restliche $CO_2$ mit einer Temperatur $T_2$ am Beginn der Vorwärmzone durch die zweite Abzugsvorrichtung aus dem Schachtofen abgezogen wird, ein Teil B mit dem Massenstrom $m_B$ des abgezogenen $CO_2$ weitergeleitet wird und ein Teil C mit dem Massenstrom mc weiteren Verwendungen oder geeigneten Lagerstätten zugeführt wird;
e) Teil A des $CO_2$ mit dem Teil B des $CO_2$ zu einem Mischgas mit der Temperatur $T_8$ zusammengeführt wird und das Mischgas mit der Temperatur $T_8$ in der mindestens einen Wärmvorrichtung auf die Temperatur Tw erwärmt wird und das $CO_2$ mit der Temperatur Tw mindestens einen Teil des vorgewärmten $CO_2$ bildet, welches im Verfahrensschritt b) dem Schachtofen durch die erste Zuführvorrichtung zugeführt wird;
f) der gebrannte Kalk oder Dolomit in der Kühlzone durch zugeführte Kühlluft gekühlt wird und die Kühlluft mit der Temperatur $T_5$ und dem Massenstrom $m_5$ zwischen der Kühlzone und der Trennzone durch die erste Abzugsvorrichtung aus dem Schachtofen wieder abgezogen wird; und
g) der gekühlte gebrannte Kalk oder Dolomit mit der Temperatur $T_{Aus}$ und dem Massenstrom $m_{Aus}$ aus dem Schachtofen ausgetragen wird.

Alle für die erfindungsgemäße Vorrichtung ausgeführten Merkmale und Vorteile treffen auch auf das erfindungsgemäße Verfahren zu und umgekehrt.

In einer bevorzugten Ausführungsform wird das Verfahren in der erfindungsgemäßen Vorrichtung ausgeführt.

In dem erfindungsgemäßen Verfahren wird Kalkstein oder Dolomitgestein der Temperatur $T_{KS}$ mit einem Massenstrom $m_{KS}$ in die Vorwärmzone des Schachtofens eingebracht. Weiterhin wird $CO_2$ mit einer Temperatur $T_1$ mit einem Massenstrom $m_1$ an der Grenze der Trennzone zur Reaktionszone durch die erste Zuführvorrichtung in den Schachtofen eingebracht. Der Kalkstein oder Dolomit wird in der Vorwärmzone durch das $CO_2$ erwärmt und erreicht in der Reaktionszone eine Temperatur, die ausreichend ist, um die Entsäuerungsreaktion in Gang zu setzten.

Ein Teil A des $CO_2$ im Schachtofen wird mit einer Temperatur $T_3$ mit einem Massenstrom $m_3$ zwischen Reaktionszone und Vorwärmzone durch die dritte Abzugsvorrichtung aus dem Schachtofen abgezogen. Das restliche $CO_2$ im Schachtofen wird mit einer Temperatur $T_2$ und einem Massenstrom $m_2$ am Beginn der Vorwärmzone aus dem Schachtofen abgezogen. Ein Teil B des abgezogenen $CO_2$ wird mit dem Massenstrom $m_B$ weitergeleitet und ein Teil C wird mit einem Massenstrom $m_C$ aus dem Prozess als hochkonzentriertes $CO_2$ abgezogen und kann weiteren Verwendungen oder geeigneten Lagerstätten zugeführt werden.

Der Teil A des $CO_2$ wird mit dem Teil B des $CO_2$ zusammengeführt und das Mischgas mit der Temperatur $T_8$ wird in eine Wärmvorrichtung geleitet und dort auf die Temperatur Tw erwärmt. In einer Ausführungsform der vorliegenden Erfindung ist das $CO_2$, welches die Wärmvorrichtung mit der Temperatur Tw verlässt, das $CO_2$, welches mit dem Massenstrom $m_1$ im Verfahrensschritt b) dem Schachtofen zugeführt wird. In dieser Ausführungsform ist die Temperatur $T_1$ gleich der Temperatur Tw.

Der Teil A und der Teil B des aus dem Schachtofen abgezogenen $CO_2$ werden wieder in den Schachtofen eingebracht und bilden damit einen Kreislauf. Durch die Entsäuerungsreaktion (Gleichung 1) im Schachtofen wird beim Brennen des Kalks oder Dolomits zusätzliches $CO_2$ freigesetzt. Dieses überschüssige $CO_2$, welches nicht für den Kreislauf im Verfahren zum Brennen von Kalk oder Dolomit benötigt wird, wird als Teil C aus dem Prozess abgezogen, einer weiteren Verwertung zugeführt oder komprimiert und in geeignete Lagerstätten eingelagert. Der Schachtofen an sich kann daher vorteilhafterweise mit dem erfindungsgemäßen Verfahren derart betrieben werden, dass das $CO_2$, das

bei der Entsäuerung aus dem Kalkstein oder Dolomit tritt, hochkonzentriert abgeschieden wird und nicht verdünnt mit Verbrennungsgasen in die Umwelt abgegeben wird.

Der gebrannte Kalk oder Dolomit wird in der Kühlzone durch zugeführte Kühlluft gekühlt und die aufgewärmte Kühlluft mit der Temperatur $T_5$ und dem Massenstrom $m_5$ wird zwischen der Kühlzone und der Trennzone durch die erste Abzugsvorrichtung aus dem Schachtofen abgezogen. Erfindungsgemäß wird die Kühlluft mit einer Temperatur $T_{Luft}$ und einem Massenstrom $m_{Luft}$ in den Schachtofen eingebracht.

Der gekühlte gebrannte Kalk oder Dolomit wird am Ende der Kühlzone mit der Temperatur $T_{Aus}$ mit dem Massenstrom $m_{Aus}$ aus dem Schachtofen ausgetragen.

Durch den Abzug des Teils A des $CO_2$ an der Grenze der Reaktionszone zur Vorwärmzone wird der $CO_2$-Massenstrom in der Vorwärmzone reduziert. Das Wärmekapazitätsstromverhältnis von $CO_2$ zu Kalkstein in der Vorwärmzone wird dadurch günstig beeinflusst. In der Konsequenz sinkt erfindungsgemäß die Temperatur $T_2$, mit der das restliche $CO_2$ am Beginn der Vorwärmzone, also am Kopf des Schachtofens, abgezogen wird, was zu einer Energieeinsparung im gesamten Prozess führt. Das Wärmekapazitätsstromverhältnis von $CO_2$ zu Kalkstein oder Dolomit liegt im Bereich von 1 bis 2, bevorzugt im Bereich von 1 bis 1,6, besonders bevorzugt im Bereich von 1 bis 1,2.

Bevorzugt wird mit dem Absaugen des Teils A des $CO_2$ zwischen 30 und 90 %, bevorzugt zwischen 40 und 85 %, besonders bevorzugt zwischen 55 und 75 % des gesamten gasförmigen $CO_2$ oberhalb der Reaktionszone abgesaugt. Der abzusaugende Massenstrom $m_3$ kann beispielsweise über die Austritttemperatur des $CO_2$ am Ofenkopf geregelt werden.

Die Temperatur $T_2$ des am Beginn der Vorwärmzone abgesaugten $CO_2$ liegt in einem Bereich von 80 und 700 °C, bevorzugt im Bereich von 80 und 400 °C, besonders bevorzugt im Bereich von 80 und 250 °C. Durch die entsprechend geringe Temperatur ist es vorteilhafterweise ausreichend, $CO_2$-Gebläse und $CO_2$-Filter für diesen niedrigeren Temperaturbereich auszulegen.

Prinzipiell erfolgt das Absaugen des $CO_2$ und der Kühlluft aus dem Schachtofen über geeignete Gebläse. Insbesondere bei der Absaugung des $CO_2$ am Ofenkopf ist der Absaugung ein $CO_2$-Filter nachgeschaltet, der unerwünschte Stäube filtert. Der Filter ist für die entsprechenden Temperaturen des $CO_2$ ausgelegt. Wird die aus dem Schachtofen abgesaugte Kühlluft weiterverwendet, beispielsweise in einer Wärmvorrichtung oder einem Vorwärmer, so durchläuft diese nach dem Absaugen aus dem Schachtofen einen geeigneten Filter bzw. Heißgaszyklon und wird so von Stäuben gereinigt.

In einer Ausführungsform des vorliegenden Verfahrens umfasst das Verfahren weiterhin den Schritt, dass

h) ein Teil D des in Verfahrensschritt d) abgezogenen $CO_2$ über eine Kurzschlussleitung dem auf die Temperatur Tw vorerwärmten $CO_2$ zugeführt wird, bevor dieses in den Schachtofen eingebracht wird.

In dieser Ausführungsform wird der Teil D mit einem Massenstrom $m_D$ und der Temperatur $T_2$ mit dem $CO_2$ mit der Temperatur $T_W$ aus der Wärmvorrichtung gemischt und in den Schachtofen eingebracht. Hierdurch wird es ermöglicht, dass Temperaturschwankungen aufgrund der Erwärmung von $m_1$ in der Wärmvorrichtung über eine Zumischung des Massenstroms $m_D$ ausgeglichen werden. Die Vorteile dieser Ausführungsform wurden bereits im Zusammenhang mit der erfindungsgemäßen Vorrichtung beschrieben.

In einer weiteren Ausführungsform des vorliegenden Verfahrens wird vor dem Verfahrensschritt e) der Teil B des in Verfahrensschritt d) abgezogenen $CO_2$ in einem Vorwärmer durch einen Teil der im Verfahrensschritt f) abgezogenen Kühlluft auf die Temperatur $T_{2V}$ erwärmt.

Durch den Abzug des Teils A des $CO_2$ aus dem Schachtofen, liegt wie beschrieben die Temperatur $T_2$ des Teils B des abgezogenen $CO_2$ in einem Bereich von 80 und 700 °C, bevorzugt im Bereich von 80 und 400 °C, besonders bevorzugt im Bereich von 80 und 250 °C und damit unterhalb der Temperatur $T_5$ mit der die erwärmte Kühlluft aus dem Schachtofen abgezogen wird. Dies wird in dieser Ausführungsform genutzt, um über einen Vorwärmer den Teil B des abgezogenen $CO_2$ zu erwärmen, bevor diesem der Teil A zugeführt wird. Hierfür werden sowohl ein Teil der abgezogenen Kühlluft als auch der Teil B des $CO_2$ durch einen Vorwärmer geleitet, in dem die Wärmeübertragung stattfindet. Der Massenstrom mx der Kühlluft, die in den Vorwärmer geleitet wird, liegt im Bereich von 0 bis 100 %, bevorzugt im Bereich von 60 bis 100 %, besonders bevorzugt im Bereich von 80 % bis 100 %. In einer Ausführungsform des Verfahrens wird die gesamte aus dem Schachtofen abgezogene Kühlluft durch den Vorwärmer geleitet.

In einer Ausführungsform der vorliegenden Erfindung umfasst die mindestens eine Wärmvorrichtung im Verfahrensschritt e) mindestens zwei Regeneratoren, einen Vorwärmer, eine Frischluftzufuhr und eine Brennstoffzufuhr und das Verfahren ist weiterhin dadurch gekennzeichnet, dass

- Frischluft im Vorwärmer auf eine Temperatur $T_{FV}$ erwärmt wird;
- die auf die Temperatur $T_{FV}$ erwärmte Frischluft für die Verbrennung mit einem Brennstoff ausgewählt aus kohlenstoffhaltigen Brennstoffen und/ oder Wasserstoff dient; und
- die bei der Verbrennung entstehenden Verbrennungsgase mit einer Temperatur $T_7$ durch mindestens einen Regenerator geleitet werden und diesen auf die Temperatur $T_{RK}$ am Regeneratorkopf und $T_{RF}$ am Regeneratorfuß aufheizen.

In einer weiteren Ausführungsform der vorliegenden Erfindung umfasst die mindestens eine Wärmvorrichtung im Verfahrensschritt e) mindestens zwei Regeneratoren, einen Vorwärmer, eine Frischluftzufuhr und eine Brennstoffzufuhr und das Verfahren ist weiterhin dadurch gekennzeichnet, dass

- Frischluft im Vorwärmer auf eine Temperatur $T_{FV}$ erwärmt wird;
- der im Vorwärmer auf die Temperatur $T_{FV}$ erwärmten Frischluft zusätzlich ein Teil der im Verfahrensschritt f) abgezogenen Kühlluft zugeführt wird und das Gasgemisch für die Verbrennung eines Brennstoffs ausgewählt aus kohlenstoffhaltigen Brennstoffen und/ oder Wasserstoff dient; und
- die bei der Verbrennung entstehenden Verbrennungsgase mit einer Temperatur $T_7$ durch mindestens einen Regenerator geleitet werden und diesen auf die Temperatur am $T_{RK}$ am Regeneratorkopf und $T_{RF}$ am Regeneratorfuß aufheizen.

In einer Ausführungsform des Verfahrens wird die gesamte in Verfahrensschritt f) aus dem Schachtofen abgezogene Kühlluft der im Vorwärmer erwärmten Frischluft zugeführt.

Die Ausführungsformen, die ein Regeneratorsystem aufweisen, haben den Vorteil, dass flexibel zwischen verschiedenen Brennstoffen gewählt werden kann. Bevorzugt werden Brennstoffe ausgewählt aus kohlenstoffhaltigen Brennstoffen und/ oder Wasserstoff, insbesondere ausgewählt aus der Gruppe aufweisend Erdgas, Biogas, Wasserstoff und vergaste Brennstoffe, wie Holzgas verwendet. Es ist daher sowohl möglich fossile Brennstoffe wie Erdgas zu nutzen, als auch Brennstoffe, die eine $CO_2$-neutralen Verbrennungsprozess ermöglichen. Brennstoffe, die einen $CO_2$-neutralen Verbrennungsprozess ermöglichen sind beispielsweise Biogas, Wasserstoff und vergaste feste Brennstoffe, wie Holzgas. Im Schachtofen wird sämtliches entstehende und eingeleitetes $CO_2$ abgesaugt und entweder in einem Kreislauf weitergeführt wird oder aus dem Prozess abgezogen und einer weiteren Verwertung zugeführt und/oder komprimiert und in geeignete Lagerstätten eingespeichert. Bei der Nutzung eines Regenerators mit $CO_2$-neutralem Verbrennungsprozess entsteht ebenfalls keine $CO_2$-Emission, die relevant für die Berechnung einer $CO_2$-Abgabe ist. Mit dieser Ausführungsform des erfindungsgemäßen Verfahrens wird damit eine Möglichkeit geschaffen gebrannten Kalk $CO_2$-neutral aus Kalkstein im Schachtofen herzustellen. Eine $CO_2$-neutrale Herstellung ist ebenfalls möglich, wenn die Wärmvorrichtung im Verfahrensschritt e) ein elektrisches Heizsystem ist. Gleiches gilt selbstverständlich auch für die Kombination von mindestens zwei Regeneratoren und einem elektrischen Heizsystem.

Selbst bei der Verwendung von fossilen Brennstoffen kann die $CO_2$-Emission gegenüber den aus dem Stand der Technik bekannten Verfahren stark reduziert werden.

Darüber hinaus ist der Temperaturverlauf im Regenerator wesentlich günstiger, da der Temperaturunterschied am Regeneratorkopf beim Beaufschlagen mit $CO_2$ und Verbrennungsgas bei einem Wärmekapazitätsstromverhältnis von ungefähr 1 wesentlich geringer ist als bei Regeneratorsystemen, wie sie im Stand der Technik genutzt werden. Mit dem vorliegenden Verfahren kann die Speicherfläche des Regenerators über die gesamte Fläche und damit wesentlich effektiver ausgenutzt werden.

Das erfindungsgemäße Verfahren ermöglicht es darüber hinaus auf verschiedenen Wegen die Reaktivität des hergestellten gebrannten Kalks oder Dolomits zu beeinflussen. Die Reaktivität beschreibt die Reaktionsfähigkeit des gebrannten Kalks oder Dolomits. Diese ist in erster Linie von der Brenntemperatur, der Brenndauer und der chemischen Zusammensetzung des Rohkalksteins abhängig. Insbesondere eine gleichmäßige Brenntemperatur wirkt sich in einer höheren Reaktivität aus [Schiele/Berens].

In einer Ausführungsform des erfindungsgemäßen Verfahrens wird die Brenntemperatur im Schachtofen

(i) durch Regelung der Temperatur $T_1$ geregelt, während der Massenstrom $m_1$ konstant ist oder

(ii) die Brenntemperatur im Schachtofen durch eine Regelung des Massenstroms $m_1$ geregelt, während die Temperatur $T_1$ konstant ist.

In beiden Ausführungsformen kann die Temperatur $T_2$, mit der das $CO_2$ am Beginn der Vorwärmzone aus dem Schachtofen abgezogen wird, konstant gehalten werden, indem die Menge an $CO_2$, die an der Grenze der Reaktionszone zur Vorwärmzone aus dem Schachtofen abgezogen wird, geregelt wird.

In einer weiteren Ausführungsform der vorliegenden Erfindung wird die Reaktivität des gebrannten Kalks oder Dolomits durch Regelung des Massenstroms $m_{Aus}$ geregelt. Hierdurch kann die Verweilzeit des Kalks oder Dolomits im Schachtofen angepasst werden. Dies ist möglich, da vorteilhafterweise die Verweilzeit des Kalks oder Dolomits im Schachtofen unabhängig vom Energieeintrag in den Schachtofen und der in den Schachtofen eingebrachten Kühlluftmenge ist. Beispielsweise ist es möglich, bei einem konstantem Kalkdurchsatz oder Dolomitdurchsatz (Massenstrom $m_{Aus}$) die Menge des umlaufenden $CO_2$ (Massenstrom $m_1$) und/oder dessen Temperatur (Temperatur $T_1$) zu erhöhen, so dass die mittlere $CO_2$ Temperatur in der Reaktionszone steigt und der Kalk bei höherer Temperatur verweilt. Dadurch wird der Sinterungsprozess forciert und die Reaktivität nimmt ab. Mit Verfahren nach dem Stand der Technik ist dies nicht gewährleistet. Hier besteht eine Abhängigkeit zwischen Kalkdurchsatz oder Dolomitdurchsatz im Ofen, also der Verweilzeit des Kalks oder Dolomits im Ofen, der Brennstoffmenge sowie der Verbrennungsluftmenge.

Das Verfahren und die Vorrichtung, die durch die vorliegende Erfindung bereitgestellt werden, bieten zahlreiche Vorteile gegenüber dem Stand der Technik.

- Die Vorrichtung ermöglicht es durch die Ausgestaltung der dritten Abzugsvorrichtung das Wärmekapazitätsstromverhältnis von Kalkstein zu $CO_2$ in dem Bereich der Vorwärmzone oberhalb der dritten Abzugsvorrichtung günstig zu beeinflussen und damit den Wärmeverlust durch den Abzug des $CO_2$ durch die erste Abzugsvorrichtung am Ofenkopf bei einer niedrigeren Temperatur im Vergleich zu den aus dem Stand der Technik bekannten Verfahren zu verringern.
- Die Erfindung stellt ein kostengünstiges Verfahren bzw. eine Vorrichtung zum Brennen von Kalk oder Dolomit zur Verfügung mit integrierter Abscheidung des $CO_2$, das bei der Entsäuerung des Kalksteins oder Dolomitgesteins entsteht, bei gleichzeitiger Flexibilität der Energiezufuhr. Die Flexibilität der Energiezufuhr entsteht durch die flexible Verwendung der ersten Wärmvorrichtung in Form eines Regeneratorsystems, eines elektrischen Heizsystems oder einer Kombination dieser. Hierdurch kann Energie auf Grundlage von fossilen oder erneuerbaren Brennstoffen genutzt werden. Ebenso ist es möglich diese mit elektrischer Energie zu kombinieren oder ausschließlich über ein elektrisches Heizsystem Wärme zuzuführen.
- Das Verfahren und die Vorrichtung weisen damit alle Voraussetzungen für eine $CO_2$-neutrale Kalkproduktion auf. Das überschüssige $CO_2$ wird in diesem Fall einer weiteren Verwertung zugeführt und/oder komprimiert und in geeignete Lagerstätten eingespeichert.
- Hierdurch wird die Abhängigkeit der Produktionskosten von den staatlichen $CO_2$-Abgaben verringert und gleichzeitig die Produktionsmenge von "grünem Kalk" gesteigert.
- Das erfindungsgemäße Verfahren bietet darüber hinaus die Möglichkeit, die Reaktivität des hergestellten gebrannten Kalks oder Dolomits zu beeinflussen.
- Das erfindungsgemäße Verfahren und die erfindungsgemäße Vorrichtung ermöglichen eine Erhöhung der Qualität des hergestellten gebrannten Kalks oder Dolomits. Da der Verbrennungsprozess im Falle der Verwendung eines Regeneratorsystems außerhalb des Schachtofens stattfindet, kommt der gebrannte Kalk oder Dolomit im Schachtofen nicht in direkten Kontakt zum Verbrennungsprozess selber bzw. den dabei verwendeten fossilen oder erneuerbaren Energieträgern und deren Aschen. Auch der Einsatz eines elektrischen Heizsystems unterbindet einen Verbrennungsprozess innerhalb des Schachtofens.
- Die erfindungsgemäße Vorrichtung und das erfindungsgemäße Verfahren sind im Vergleich zu den aus dem Stand der Technik bekannten Verfahren und Vorrichtung energetisch effizienter und damit wirtschaftlicher.
- Weiterhin ist die erfindungsgemäße Vorrichtung und das erfindungsgemäße Verfahren in der Kalkindustrie einsetzbar, da im Vergleich zum Stand der Technik hochkalorische Brennstoffe eingesetzt werden können und damit vorhandene Infrastruktur in den Kalkwerken genutzt werden kann.

Im Folgenden wird die vorliegende Erfindung durch 11 Figuren mit einem Vergleichsbeispiel und 2 Ausführungsbeispielen näher erläutert.

Figur 1 stellt einen Schachtofen zum Brennen von Kalk aus dem Stand der Technik dar;
Figur 2 stellt eine Ausführungsform der vorliegenden Erfindung dar;
Figur 3 stellt eine weitere Ausführungsform der vorliegenden Erfindung dar;
Figur 4 stellt eine weitere Ausführungsform der vorliegenden Erfindung dar;
Figur 5 stellt eine weitere Ausführungsform der vorliegenden Erfindung dar;
Figur 6 stellt eine weitere Ausführungsform der vorliegenden Erfindung dar;
Figur 7 (A) stellt ein Regeneratorsystem dar, welches mit einem Verfahren aus dem Stand der Technik betrieben wird; (B) stellt ein Regeneratorsystem dar, welches mit dem vorliegenden Verfahren betrieben wird; (C) stellt einen Regenerator eines Regeneratorsystems dar;
Figur 8 (A) stellt den Temperaturverlauf in einem Regeneratorsystem beim Be- und Entladen dar, welches mit einem Verfahren aus dem Stand der Technik betrieben wird; (B) stellt den Temperaturverlauf in einem Regeneratorsystem beim Be- und Entladen dar, welches mit dem erfindungsgemäßen Verfahren betrieben wird;
Figur 9 stellt ein Vergleichsbeispiel nach dem Stand der Technik dar;
Figur 10 stellt ein Ausführungsbeispiel 1 der vorliegenden Erfindung dar;
Figur 11 stellt ein Ausführungsbeispiel 2 der vorliegenden Erfindung dar.

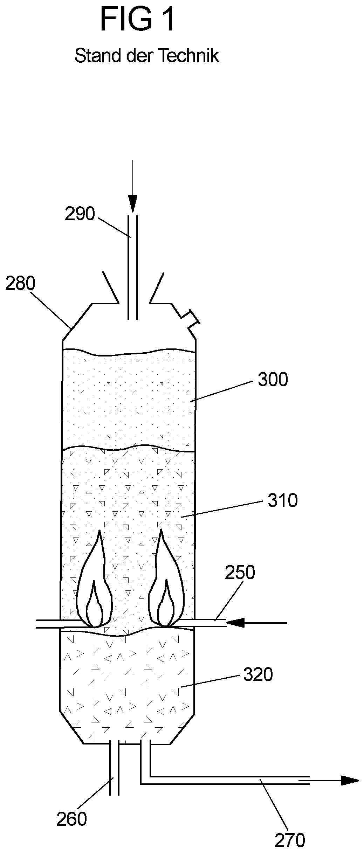

**Figur 1** stellt einen Schachtofen 280 zum Brennen von Kalk aus dem Stand der Technik dar. Im Schachtofen 280 wird Kalk durch die Zuführung 290 zugegeben. Der Schachtofen 280 weist eine Vorwärmzone 300 eine Reaktionszone 310 und eine Kühlzone 320 auf. Zwischen Kühlzone 320 und Reaktionszone 310 wird über eine Brennstoff- und Luftzufuhr 250 Brennstoff und Luft in den Schachtofen 280 eingebracht. Durch die Verbrennungsreaktion im Schachtofen 280 wird genügend Energie erzeugt, um den Kalk zu entsäuern. Am unteren Ende der Kühlzone 320 wird über die Zuführung 260 Kühlluft eingebracht, um den gebrannten Kalk vor der Kalkaustragung 270 zu kühlen. Diese Verfahren aus dem Stand der Technik bieten technisch keine Möglichkeit, prozessintern hochkonzentriertes $CO_2$ zu erzeugen, das direkt einer weiteren Verwertung zugeführt und/oder komprimiert und in geeignete Lagerstätten eingespeichert werden kann. Alternativ können nur nachgeschaltete $CO_2$-Abscheideverfahren eingesetzt werden, die einen erheblichen energetischen und finanziellen Aufwand bedeuten.

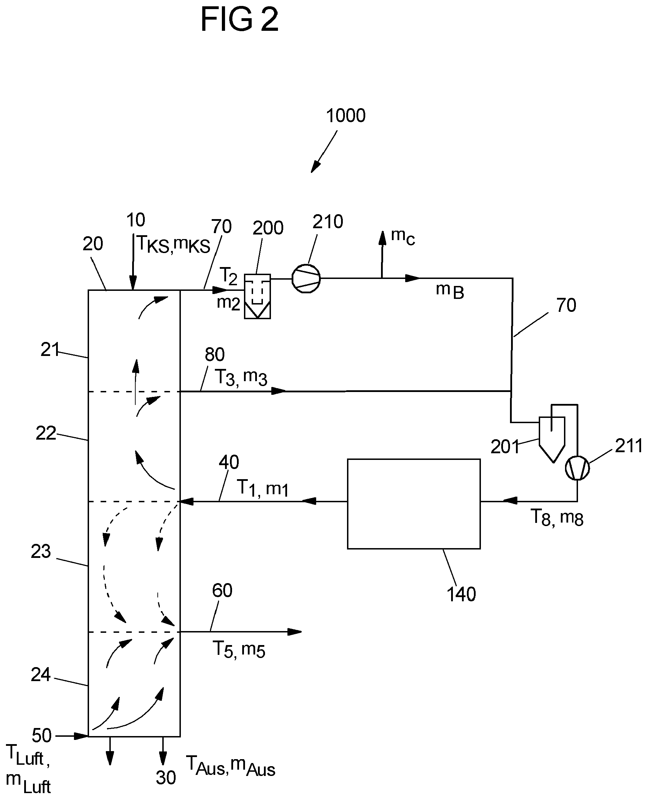

**Figur 2** stellt eine Ausführungsform der vorliegenden Erfindung dar. Der Schachtofen 20 weist eine Vorwärmzone 21, eine Reaktionszone 22, eine Trennzone 23 und eine Kühlzone 24 auf. In den Schachtofen wird zu Beginn der Vorwärmzone über die Kalksteinaufgabe 10 der Kalkstein eingebracht. Der Kalk weist dabei eine Temperatur $T_{KS}$ auf und wird mit einem Massenstrom $m_{KS}$ in den Schachtofen 20 eingebracht. Über die erste Zuführvorrichtung 40 wird $CO_2$ der Temperatur $T_1$ mit einem Massenstrom $m_1$ an der Grenze der Trennzone 23 zur Reaktionszone 22 in den Schachtofen 20 eingebracht. Die Temperatur $T_1$ sowie des Massenstroms $m_1$ des $CO_2$ ist derart gewählt, dass genügend Energie in den Schachtofen 20 eingebracht wird, um den Kalkstein in der Reaktionszone 22 zu entsäuern. Oberhalb der Reaktionszone 22 wird ein Teil A des $CO_2$ über die dritte Abzugsvorrichtung 80 mit einer Temperatur $T_3$ und einem Massenstrom $m_3$ aus dem Schachtofen 20 abgezogen. Am Beginn der Vorwärmzone 21, am Kopf des Schachtofens 20 wird das restliche $CO_2$ aus dem Schachtofen 20 über die zweite Abzugsvorrichtung 70 abgezogen. Das restliche $CO_2$ weist dabei eine Temperatur $T_2$ auf und wird mit einem Massenstrom $m_2$ abgezogen. Die Abzugsvorrichtung 70 weist einen Filter 200 zur Entstaubung des $CO_2$ auf und ein Gebläse 210, um das $CO_2$ in der Abzugsvorrichtung weiterzuleiten. Ein Teil mc des $CO_2$ wird aus dem Prozess abgezogen. Dieser Teil kann einer weiteren Nutzung in anderen Prozessen zur Verfügung gestellt und/oder komprimiert und in geeignete Lagerstätten eingelagert werden.

Ein Teil $m_B$ des $CO_2$ in der zweiten Abzugsvorrichtung 70 wird weitergeleitet. Die dritte Abzugsvorrichtung 80 mündet in die zweite Abzugsvorrichtung 70 ein und die in beiden Abzugsvorrichtungen weitergeleiteten $CO_2$ Gasströme werden miteinander vermischt. Das anschließend in der zweiten Abzugsvorrichtung 70 weitgeleitete $CO_2$ weist dann eine Temperatur $T_8$ und einen Massenstrom $m_8$ auf. Bevor das $CO_2$ mit der Temperatur $T_8$ in die Wärmvorrichtung 140 geleitet wird, wird es erneut in einem Heißgasfilter bzw. Heißgaszyklon 201 entstaubt und durchläuft ein Heißgasgebläse 211. In der Wärmvorrichtung 140 wird das $CO_2$ auf eine Temperatur Tw erwärmt. Erfindungsgemäß kann die Wärmvorrichtung ein Regeneratorsystem 90, ein elektrisches Heizsystem 100 oder eine Kombination dieser sein. Nach dem Verlassen der Wärmvorrichtung, gelangt das $CO_2$ über die erste Zuführvorrichtung wieder in den Schachtofen 20. In dieser Ausführungsform entspricht die Temperatur Tw der Temperatur $T_1$. Ein Teil des $CO_2$ fließt damit in einem Kreislauf und trägt die benötigte Energie u.a. für die Entsäuerungsreaktion in den Schachtofen 20 ein.

Im Schachtofen 20 herrscht daher innerhalb der Vorwärm- 21 und der Reaktionszone 22 eine nahezu reine $CO_2$-Atmosphäre. Am Ende der Kühlzone 24 wird Kühlluft mit einem Massenstrom $m_{Luft}$ über die zweite Zuführeinrichtung 50 in den Schachtofen 20 eingebracht. Die Kühlluft weist eine Temperatur $T_{Luft}$ auf und kühlt den gebrannten Kalk in der Kühlzone 24. An der Grenze der Kühlzone 24 zur Trennzone 23 wird die auf die Temperatur $T_5$ erwärmte Kühlluft wieder aus dem Schachtofen 20 mit einem Massenstrom ms abgezogen. Da zwischen der Kühlzone 24 und der Reaktionszone 22 die Trennzone 23 liegt wird eine Trennung der $CO_2$-Atmosphäre in der Vorwärm- 21 und Reaktionszone 22 von der Luftatmosphäre in der Kühlzone 24 ermöglicht. Die abgezogene Kühlluft mit der Temperatur Ts kann erfindungsgemäß weiter prozessintern in der Vorrichtung bzw. dem Verfahren genutzt werden, oder aber prozessintern nicht weiter genutzt werden.

Der gebrannte Kalk wird über eine Vorrichtung zum Austragen 30 mit der Temperatur $T_{Aus}$ und dem Massenstrom $m_{Aus}$ aus dem Schachtofen ausgetragen.

Die erfindungsgemäße Vorrichtung 1000 ermöglicht es damit $CO_2$ als Wärmeträger zu verwenden, um den Energiebedarf für die Entsäuerungsreaktion in den Schacht einzutragen, wobei das $CO_2$ in einem Kreislauf geführt wird, bzw. überschüssiges $CO_2$ einer weiteren Verwertung zugeführt und/oder komprimiert und in geeignete Lagerstätten eingespeichert wird. Darüber hinaus findet innerhalb des Schachtofens 20 keine Verbrennungsreaktion statt, wodurch keine Brennstoffe oder deren Aschen in den Schachtofen 20 eingetragen werden.

Durch den Abzug des Teils A des $CO_2$ durch die dritte Abzugsvorrichtung 80 wird die Austrittstemperatur $T_2$ des restlichen $CO_2$ beim Abzug aus dem Ofen über die zweite Abzugsvorrichtung 70 reduziert. Aufgrund der verringerten Temperatur am Ofenkopf ist der Energieverlust, der durch den Abzug des $CO_2$-Stroms mc aus dem Gesamtprozess auftritt, wesentlich reduziert im Vergleich zu Verfahren aus dem Stand der Technik. Das Wärmekapazitätsstromverhältnis von $CO_2$ zu Kalkstein liegt in der vorliegenden Erfindung vorteilhafterweise im Bereich von 1 bis 2,0, bevorzugt im Bereich von 1 bis 1,6, besonders bevorzugt im Bereich von 1 bis 1,2. Die $CO_2$-Filter und Gebläse in der zweiten Abzugsvorrichtung 70 können darüber hinaus vorteilhafterweise auf entsprechend niedrigere Temperaturen ausgelegt werden.

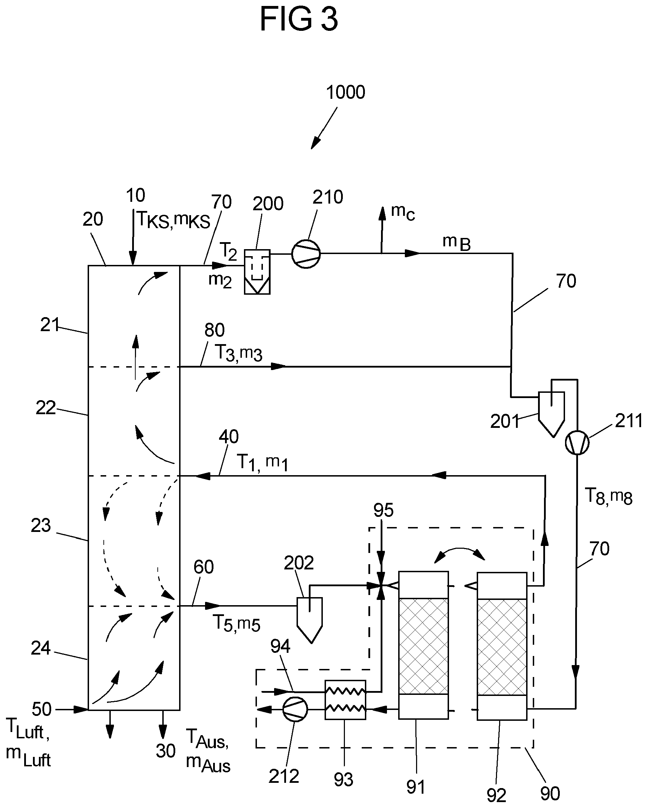

**Figur 3** stellt eine weitere Ausführungsform der vorliegenden Erfindung dar. Der Aufbau ist der Gleiche wie in der Figur 2 beschrieben. Die Wärmvorrichtung 140 ist in dieser Ausführungsform ein Regeneratorsystem 90. Das Regeneratorsystem 90 weist zwei Regeneratoren 91, 92 auf, die im Wechsel be- und entladen werden können. Das $CO_2$

strömt über die zweite Abzugsvorrichtung 70 mit dem Massenstrom $m_8$ und der Temperatur $T_8$ am Regeneratorfuß in den beladenen Regenerator, wird dort auf die Temperatur $T_W$ erwärmt und wird vom Regeneratorkopf über die erste Zuführvorrichtung 40 dem Schachtofen 20 wieder zugeführt. In dieser Ausführungsform entspricht die Temperatur Tw der Temperatur $T_1$, mit der das $CO_2$ in den Schachtofen 20 eingeleitet wird. Die Regeneratoren 91, 92 des Regeneratorsystems 90 werden durch ein Verbrennungsgas beladen. Das Regeneratorsystem 90 weist weiterhin einen ersten Vorwärmer 93 auf. Über eine Zuführung von Frischluft 94 wird Frischluft der Temperatur $T_F$ mit einem Massenstrom $m_F$ in den Vorwärmer geleitet und dort auf die Temperatur $T_{FV}$ erwärmt. In dieser Ausführungsform wird, die aus dem Schachtofen 20 an der Grenze der Kühlzone 24 zur Trennzone 23 durch die erste Abzugsvorrichtung 60 abgezogene Kühlluft mit der erwärmten Frischluft der Temperatur $T_{FV}$ vermischt und das Mischgas dient als Verbrennungsluft für die Verbrennung. Vor dem Vermischen der Frischluft mit der Kühlluft, wird die Kühlluft mit Temperatur Ts zuvor in einem geeigneten Heißgasfilter bzw. Heißgaszyklon 202 entstaubt, um den Staubeintrag in das Regeneratorsystem 90 so gering wie möglich zu halten.

Zur Erzeugung des Verbrennungsgases wird ein Brennstoff über eine Zuführung von Brennstoff 95 zugeführt. Als Verbrennungsluft dient hier die erwärmte Frischluft und die erwärmte Kühlluft. Das bei der Verbrennung des Brennstoffes erzeugte Verbrennungsgas mit einer Temperatur $T_7$ wird durch die Regeneratoren 91, 92 geleitet, um diese zu beladen. Dabei wird das Verbrennungsgas am Regeneratorkopf eingeleitet, erwärmt diesen auf eine Temperatur $T_{RK}$ und am Regeneratorfuß wieder abgeleitet. Der Regeneratorfuß wird dabei auf eine Temperatur $T_{RF}$ erwärmt. Das am Regeneratorfuß abgeleitete Verbrennungsgas wird vorteilhafterweise durch den ersten Vorwärmer 93 geleitet, womit die Restwärme des Verbrennungsgases zur Erwärmung der Frischluft genutzt werden kann. Um die Kühlluft aus dem Schachtofen abzuziehen, die Frischluft anzusaugen und anschließend das Verbrennungsgas durch den Regenerator zu leiten, kann ein Gebläse 212 genutzt werden.

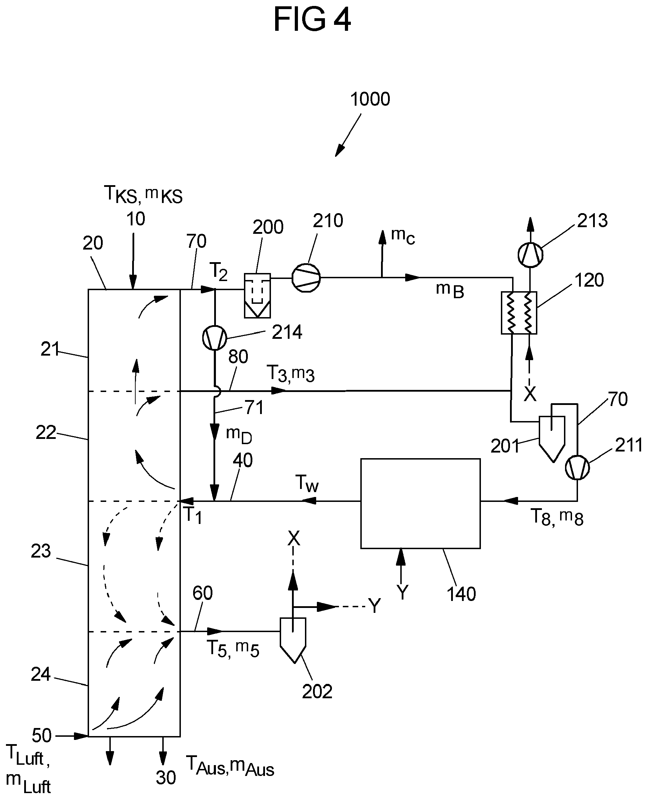

**Figur 4** stellt eine weitere Ausführungsform der vorliegenden Erfindung dar, wobei der Aufbau prinzipiell dem in der Figur 2 ähnelt. Diese Ausführungsform weist eine Verbindung über eine Kurzschlussleitung 71 von der zweiten Abzugsvorrichtung 70 zur ersten Zuführvorrichtung 40 auf. Durch die Kurzschlussleitung kann ein Teil D des am Ofenkopf durch die zweite Abzugsvorrichtung 70 abgesaugten $CO_2$ mit einer Temperatur $T_2$ und einem Massenstrom $m_D$ in die erste Zuführvorrichtung 40 eingeleitet werden. Hierdurch kann die Temperatur $T_1$ des $CO_2$, welches in den Schachtofen 20 eingeleitet wird, geregelt werden. Durch das Einleiten des $CO_2$ mit der Temperatur $T_2$ über die Mischleitung 71 können Schwankungen der Temperatur Tw mit der das $CO_2$ aus der Wärmvorrichtung 140 kommt, ausgeglichen werden. Die Mischleitung 71 kann ein Gebläse 214 aufweisen.

Umfasst die Wärmvorrichtung 140 ein Regeneratorsystem 90, so kann insbesondere der Entladungsvorgang des Regenerators 91, 92 im Regeneratorsystem 90 zu periodischen Schwankungen der Temperatur Tw führen mit der das $CO_2$ aus dem Regenerator 91, 92 austritt. Ohne eine weitere Regelung entspricht die Temperatur Tw der Temperatur $T_1$ mit der das $CO_2$ in den Schachtofen 20 eingeleitet wird. In diesem Fall wird der Schachtofen 20 dann mit $CO_2$ mit einer periodisch schwankenden Temperatur beaufschlagt. Dies bedeutet auch einen zeitlich schwankenden Energieeintrag in den Schachtofen 20. Diese Schwankungen wirken sich auf die Temperaturen im Schachtofen aus, die entsprechend ebenfalls Schwankungen unterliegen. Schwankende Temperaturen im Schachtofen stehen einer gleichbleibenden Kalkqualität entgegen. Durch die erfindungsgemäße Vorrichtung bzw. das erfindungsgemäße Verfahren können die Schwankungen im Energieeintrag und damit in der Brenntemperatur vermieden werden. Insbesondere die Regelung der Temperatur $T_1$ durch die Zuführung von $CO_2$ der Temperatur $T_2$ über die Kurzschlussleitung 71 zum $CO_2$ der Temperatur $T_W$ aus der Wärmvorrichtung ermöglicht die gewünschte Temperaturregelung. Je nach Mischverhältnis von $CO_2$ der Temperatur Tw und $CO_2$ der Temperatur $T_2$ kann die Temperatur $T_1$ eingestellt und damit geregelt werden.

Weiterhin stellt die Figur 4 eine Vorrichtung 1000 dar, in der ein Teil X der durch die erste Abzugsvorrichtung 60 abgezogenen Kühlluft in den zweiten Vorwärmer 120 geleitet wird. Aus dem Schachtofen wird die erwärmte Kühlluft mit der Temperatur $T_5$ und dem Massenstrom $m_5$ abgezogen. Die Kühlluft wird durch einen geeigneten Heißgasfilter bzw. Heißgaszyklon 202 entstaubt. Ein Teil X wird dem zweiten Vorwärmer 120 zugeführt und damit dazu genutzt, den Massenstrom $m_B$ auf eine Temperatur $T_{2V}$ zu erwärmen. Nach dem zweiten Vorwärmer wird die Kühlluft abgeleitet. Hierfür können geeignete Gebläse 213 eingesetzt werden. Der Teil X der Kühlluft, kann die gesamte aus dem Schachtofen 20 abgezogene Kühlluft sein oder auch nur ein Teil davon. Umfasst die Wärmvorrichtung 140 ein Regeneratorsystem kann ein Teil Y der abgezogenen Kühlluft in das Regeneratorsystem 90 geleitet werden und dort, wie bereits beschrieben, als Verbrennungsgas verwendet werden. Die Anteile X und Y können je nach Bedarf zwischen 0 % und 100 % aufgeteilt werden, wobei X + Y = 100 % ergibt.

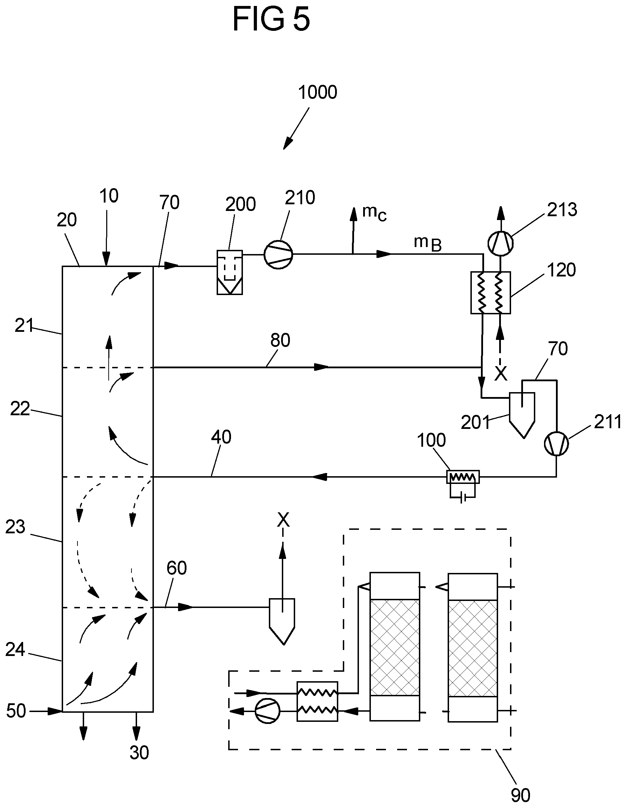

**Figur 5** stellt eine weitere Ausführungsform der vorliegenden Erfindung dar, wobei der Aufbau prinzipiell dem in der Figur 4 ähnelt. Als Wärmvorrichtung 140 wird ein elektrisches Heizsystem 100 verwendet. Das $CO_2$ wird über die zweite Abzugsvorrichtung 70 in das elektrische Heizsystem geleitet und dort auf die Temperatur Tw erwärmt. Vom elektrischen Heizsystem wird es über die erste Zuführvorrichtung 40 in den Schachtofen 20 geleitet.

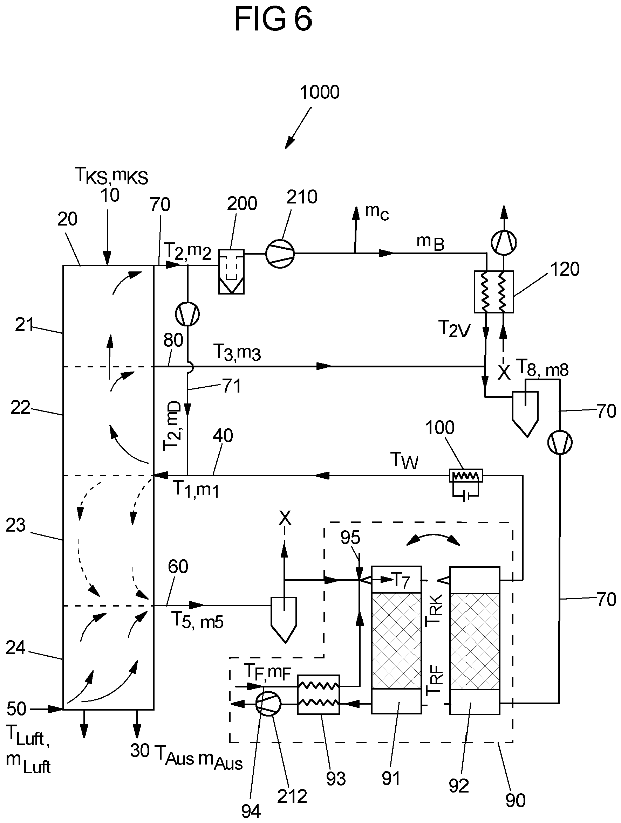

**Figur 6** stellt eine Ausführungsform der vorliegenden Erfindung dar, die sämtliche bereits beschriebenen Merkmale der Erfindung aufweist. Die Wärmvorrichtung 140 ist in dieser Ausführungsform als Kombination eines Regeneratorsystems 90 mit einem elektrischen Heizsystem 100 ausgebildet. Die Vorrichtung 1000 weist sowohl eine Kurzschlussleitung 71, als auch einen zweiten Vorwärmer 120 auf. Die durch die erste Abzugsvorrichtung 60 abgezogene Kühlluft wird zum Teil in den zweiten Vorwärmer 120 geleitet und zum Teil in das Regeneratorsystem 90.

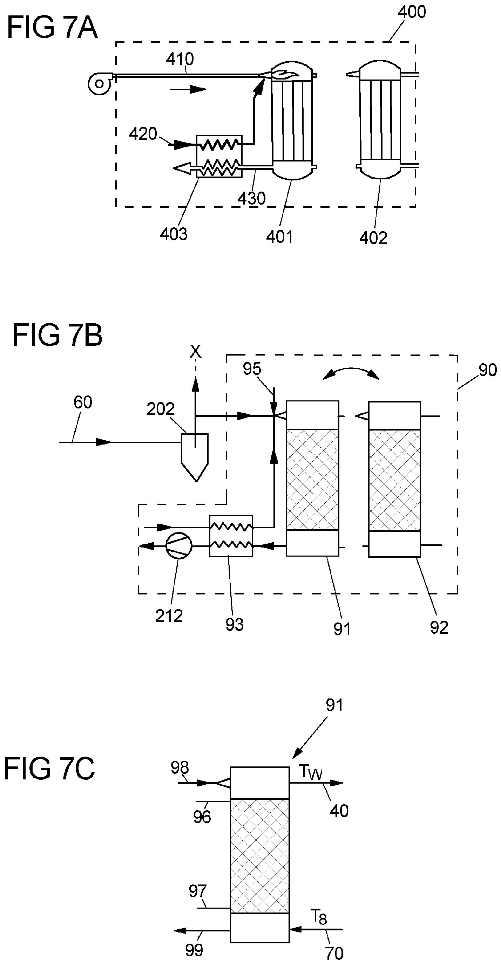

**Figur 7(A)** stellt ein Regeneratorsystem 400 dar, welches mit einem Verfahren aus dem Stand der Technik betrieben wird. Zum Beladen wird der Regenerator 401 mit Verbrennungsgas durchströmt. Für die Verbrennung wird Schwachgas über die Zufuhr 420 durch den Vorwärmer 420 geleitet und erwärmt. Das erwärmte Schwachgas wird als Brennstoff genutzt. Als Verbrennungsluft wird Kühlluft 410, die aus dem Schachtofen abgezogen wird, zugeführt. Das bei der Verbrennung entstehende Verbrennungsgas wird in den Regenerator 401 geleitet, wodurch dieser beladen wird. Die Restwärme des am Regeneratorfuß ausströmenden Abgases wird durch den Vorwärmer 403 geleitet und so zur Erwärmung des Schwachgases genutzt. Als Schwachgas wird zum Beispiel Gichtgas oder Stahlgas verwendet. Diese Regeneratorsysteme 400 werden nach dem Stand der Technik im Bereich der Stahlindustrie eingesetzt, wo die genannten Gase zur Verfügung stehen.

**Figur 7 (B)** stellt gegenüber der Figur 7 (A) noch einmal ein Regeneratorsystem 90 dar, welches mit dem vorliegenden Verfahren betrieben wird. Dieses Regeneratorsystem 90 ermöglicht die flexible Nutzung von fossilen oder erneuerbaren Brennstoffen. Insbesondere kann das Regeneratorsystem 90 vorteilhafterweise in der Kalkindustrie eingesetzt werden, in der Schwachgase, wie z.B. Gichtgas nicht zur Verfügung stehen. In der Kalkindustrie werden hochkalorische Brennstoffe, wie z.B. Erdgas eingesetzt. Diese können jedoch nicht in Regeneratorsystemen 400 aus dem Stand der Technik eingesetzt werden, da die hochkalorischen Brennstoffe nicht in einem Vorwärmer erwärmt werden können. Das Regeneratorsystem 90 gemäß der vorliegenden Erfindung behebt diesen Nachteil und ermöglicht damit den unkomplizierten Einsatz der Erfindung in der Kalkindustrie. Eine detaillierte Beschreibung der Funktionsweise des Regeneratorsystems 90 findet sich in der Beschreibung der Figur 3.

**Figur 7 (C)** stellt einen Regenerator 91 des Regeneratorsystems 90 dar. Am Regeneratorkopf 96 wird das Verbrennungsgas eingeleitet 98, dieses durchströmt den Regenerator 91 beim Beladen und verlässt diesen wieder am Regeneratorfuß 97 durch die Ableitung 99. Der Regenerator 91 wird dabei am Regeneratorkopf 96 auf die Temperatur $T_{RK}$ und am Regeneratorfuß 97 auf die Temperatur $T_{RF}$ erwärmt.

Beim Entladen strömt das $CO_2$ über die zweite Abzugsvorrichtung 70 mit der Temperatur $T_8$ am Regeneratorfuß 97 in den Regenerator, durchströmt diesen und verlässt den Regenerator 91 am Regeneratorkopf 96 mit der Temperatur Tw durch die erste Zuführvorrichtung 40.

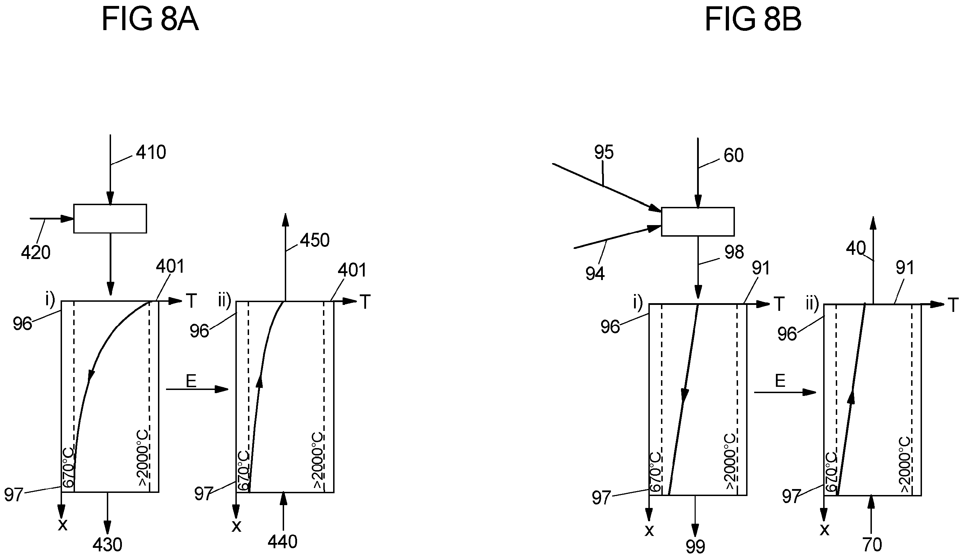

**Figur 8 (A)** stellt den Temperaturverlauf in einem Regeneratorsystem 400 aus dem Stand der Technik, wie in Figur 7 (A) dargestellt, beim Be- und Entladen dar. In der Darstellung i) wird der Regenerator 401 durch die Zuführung 410 eines Verbrennungsgases geladen. Das Verbrennungsgas entsteht durch die Verbrennung von Kühlluft (Zufuhr über Kühlluftzufuhr 410), die aus einem Schachtofen abgezogen wird mit einem Brennstoff (Zufuhr über Brennstoffzufuhr 420). Der Massenstrom des Verbrennungsgases wird daher maßgeblich durch den Massenstrom der Kühlluft bestimmt. Das Verbrennungsgas hat typischerweise eine hohe Temperatur von oberhalb 2000 °C. Am Regeneratorkopf 96 wird das Speichermedium des Regenerators 401 daher auf eine Temperatur von oberhalb 2000 °C geladen. Über die gesamte Länge x des Regenerators gibt das Verbrennungsgas Wärmeenergie an das Speichermedium ab und verlässt am Regeneratorfuß 97 den Regenerator 401 typischerweise mit einer Temperatur von ca. 700 °C. In der Darstellung ii) ist die Entladung des Regenerators 401 dargestellt. $CO_2$ wird typischerweise mit einer Temperatur von ca. 700 °C über die $CO_2$-Zufuhr 440 in den Regeneratorfuß 97 eingeleitet und durch die gesamte Länge x des Regenerators geleitet. Am Regeneratorkopf 96 verlässt das $CO_2$ den Regenerator 401 über die Ableitung 450 mit einer Temperatur $T_1$. Beim Umschalten vom Beladen auf das Entladen wird der Regeneratorkopf 96 daher zuerst von Verbrennungsgasen mit einer Temperatur von oberhalb 2000 °C beaufschlagt und gleich nach dem Umschalten auf das Entladen mit $CO_2$ einer Temperatur $T_1$. Das Wärmekapazitätsstromverhältnis zwischen Verbrennungsgas, das das Regeneratorsystem beim Beladen durchströmt und $CO_2$, dass das Regeneratorsystem beim Entladen durchströmt, liegt deutlich oberhalb von 1,5, typischerweise im Bereich von 2 bis 2,5 (Yang et al.). Am Regeneratorkopf 96 schwankt damit das Temperaturniveau stark, dass große thermische Spannungen im Speichermaterial auftreten. Dies führt zu den bereits beschriebenen zahlreichen Nachteilen.

**Figur 8 (B)** stellt dagegen den Temperaturverlauf in einem Regeneratorsystem 90 gemäß der vorliegenden Erfindung, wie in Figur 7 (B) dargestellt, beim Be- und Entladen dar. In der Darstellung i) wird der Regenerator 9 durch die Zuführung eines Verbrennungsgases 98 geladen. Das Verbrennungsgas entsteht durch die Verbrennung von Frischluft (Zufuhr über Frischluftzufuhr 94) und optional Kühlluft (Zufuhr über erste Abzugsvorrichtung 60), die aus dem Schachtofen abgezogen wird, mit einem Brennstoff (Zufuhr über Brennstoffzufuhr 95). Der Massenstrom des Verbrennungsgases wird maßgeblich durch den Massenstrom der Frischluft bestimmt und ist daher flexibel einstellbar. Hierdurch ist es möglich, dass das Wärmekapazitätsstromverhältnis zwischen Verbrennungsgas, welches das Regeneratorsystem beim Beladen durchströmt und $CO_2$, welches das Regeneratorsystem beim Entladen durchströmt, derart einzustellen, dass es im Bereich von 0,9 bis 1,1 liegt. Am Regeneratorkopf 96 wirkt damit eine wesentlich geringere thermische Belastung auf das Material des Regenerators ein. Dies wirkt sich positiv auf die Haltbarkeit des Speichermaterials des Regenerators und damit auf dessen Wartungsintensität ab. Die Wirtschaftlichkeit des gesamten Verfahrens wird so deutlich erhöht.

Das Verbrennungsgas kann beispielsweise eine Temperatur von ca. 1450 °C aufweisen. Am Regeneratorkopf 96 wird das Speichermedium des Regenerators 91 daher auf eine Temperatur von ca. 1450 °C geladen. Über die gesamte Länge x des Regenerators gibt das Verbrennungsgas Wärmeenergie an das Speichermedium ab und verlässt am Regeneratorfuß 97 den Regenerator 401 typischerweise mit einer Temperatur von ca. 800 °C. In der Darstellung ii) ist die Entladung des Regenerators 91 dargestellt. $CO_2$ wird typischerweise mit einer Temperatur von ca. 700 °C über die zweite Abzugsvorrichtung 70 in den Regeneratorfuß 97 eingeleitet und durch die gesamte Länge x des Regenerators geleitet. Am Regeneratorkopf 96 verlässt das $CO_2$ den Regenerator 91 über die erste Zuführvorrichtung 40 mit einer Temperatur von beispielsweise 1350 °C. Beim Umschalten vom Beladen auf das Entladen wird der Regeneratorkopf 96 daher zuerst von Verbrennungsgasen mit einer Temperatur von ca. 1450 °C beaufschlagt und gleich nach dem Umschalten auf das Entladen mit $CO_2$ einer Temperatur von ca. 1350 °C. Der Temperaturunterschied am Regeneratorkopf 96 ist damit wesentlich reduziert, womit auch die auftretenden thermischen Spannungen wesentlich verringert sind.

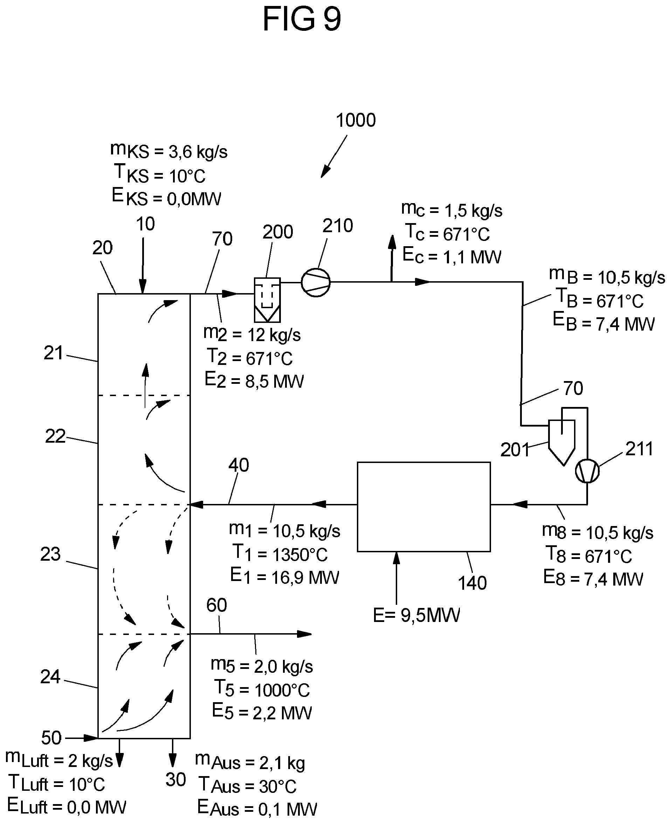

**Figuren 9 bis 11** stellen ein Vergleichsbeispiel nach dem Stand der Technik sowie zwei Ausführungsbeispiele der Erfindung dar. Für diese Beispiele wurde angenommen, dass die vollständige stoffliche Trennung der Gasatmosphären ($CO_2$ in der Reaktionszone und Kühlluft in der Kühlzone) gewährleistet ist. Sämtliche Prozessparameter wie Temperaturen und Massenströme sind in Beispielen angegeben. Zusätzlich sind die Energieströme, die eingetragen oder abgezogen werden, angegeben. Diese wurden jeweils mit dem Zeichen E und dem bereits für die zugehörige Temperatur und den zugehörigen Massenstrom verwendeten Zusatz gekennzeichnet. Alle in den Beispielen angegebenen Energieströme sind bezogen auf eine Referenztemperatur von 0 °C.

## Vergleichsbeispiel 1

In Figur 9 ist ein Verfahrensbeispiel nach dem Stand der Technik dargestellt. Sämtliches $CO_2$, das dem Schachtofen 20 über die Zuführvorrichtung 40 zugeführt wird bzw. aus dem Kalkstein während der Entsäuerung austritt, strömt Richtung Ofenkopf und wird über die Abzugsvorrichtung 70 abgezogen. Der Wärmevorrichtung 140 wird der für den Prozess benötigte Energiestrom zugeführt. Für die Vergleichbarkeit wurde vereinfacht angenommen, dass dieser Energiestrom vollständig zur Erwärmung des $CO_2$ (Massenstrom ms) genutzt werden kann und keine Wärmeverluste z.B. durch einen Verbrennungsprozess auftreten. Die Wärmvorrichtung ist hier nicht weiter spezifiziert. Die erwärmte Kühlluft, die über die Abzugsvorrichtung 60 aus dem Schachtofen 20 abgezogen wird, wird prozessintern nicht weiter genutzt.

## Ausführungsbeispiel 1

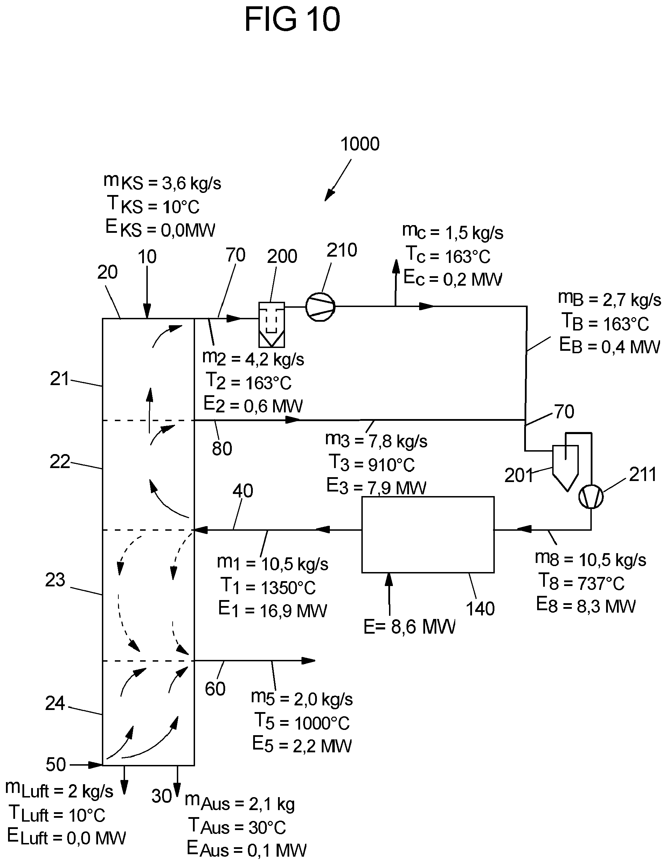

In Figur 10 ist eine Ausführungsform der vorliegenden Erfindung dargestellt, die die Energieeffizienz des in Figur 9 gezeigten Verfahrensbeispiels nach dem Stand der Technik erhöht. Ausgehend von dem Verfahrensbeispiel in Figure 9 wird dazu erfindungsgemäß die dritte Abzugsvorrichtung 80 eingesetzt, über die ein Teil des im Schachtofen 20 nach oben strömenden $CO_2$ abgezogen wird und anschließed mit dem verbleibenden $CO_2$ vom Ofenkopf gemischt, erwärmt und dem Schachtofen 20 über die Zuführvorrichtung 40 wieder zugeführt. Somit strömt nicht das gesamte $CO_2$ Richtung Ofenkopf und der Massenstrom $m_2$ und die Temperatur $T_2$ werden im Vergleich gesenkt. Das hat zur Folge, dass der $CO_2$-Strom mc mit einer niedrigeren Temperatur den Prozess verlässt, wodurch sich der Wärmeverlust im Vergleich reduziert. Dies wird ebenfalls durch den geringeren Energiebedarf zur Erwärmung des umlaufenden $CO_2$ (Massenstrom ms) durch die Wärmvorrichtung 140 deutlich.

## Ausführungsbeispiel 2

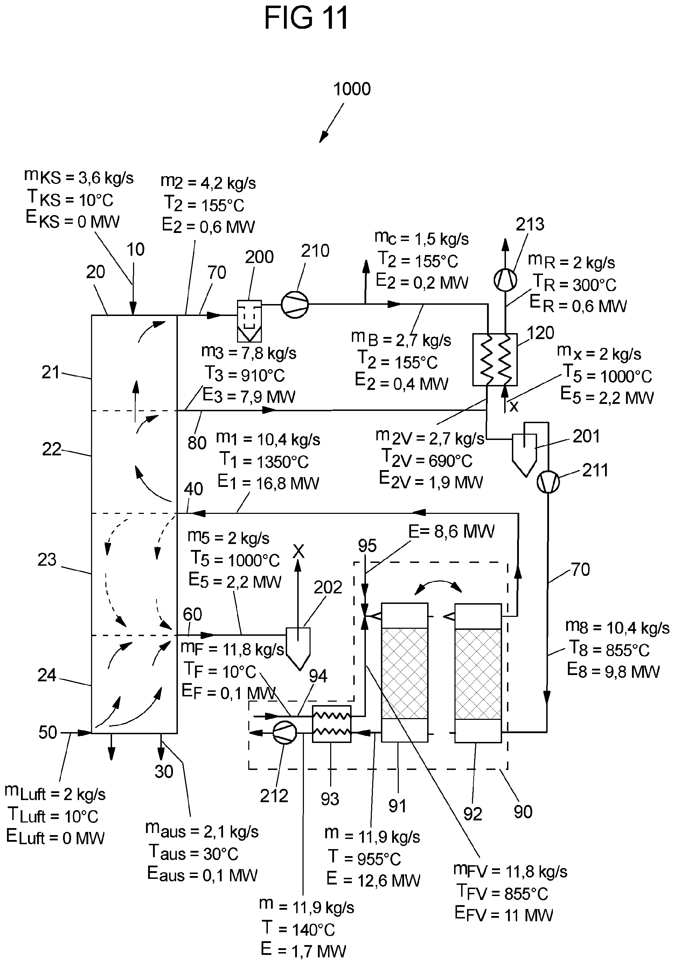

In Figur 11 ist eine Ausführungsform der vorliegenden Erfindung dargestellt, die sämtliche bereits beschriebenen Merkmale der Erfindung aufweist. Das erfindungsgemäße Verfahren wurde mit der dargestellten Ausführungsform der Erfindung durchgeführt. Dabei wurde die gesamte durch die erste Abzugsvorrichtung 60 abgesaugte Kühlluft dem zweiten Vorwärmer 120 zugeführt. Als Wärmvorrichtung wurde ein Regeneratorsystem 90 verwendet. Das Verbrennungsgas für die Beladung des Regeneratorsystems 90 wurde durch die Zufuhr von Erdgas L als Brennstoff und erwärmter Frischluft der Temperatur $T_{FV}$ erzeugt.

## Literaturangaben

[Maerz Ofenbau AG] Maerz Ofenbau AG, Sustainable lime burning technology with shaft kilns, ZKG 6/2021
[Yang et al.] Yang et al., Novel Lime Calcination Systems for CO2 Capture and its Thermal-Mass Balance Analysis, ACS Omega, 5 (42), 27413-27424, 2020
[Schiele/Berens] E. Schiele/ L.W. Berens, "Kalk", Verlag Stahleisen M. B. H. Düsseldorf, 1972, Seite 190, Abschnitt 4.3.4.4

**Bezugszeichenliste**

| 10 | Kalksteineintragung |
|---|---|
| 20 | Schachtofen |
| 21 | Vorwärmzone |
| 22 | Reaktionszone |
| 23 | Trennzone |
| 24 | Kühlzone |
| 30 | Vorrichtung zum Austragen von gebranntem Kalk |
| 40 | erste Zuführvorrichtung |
| 50 | zweite Zuführvorrichtung |
| 60 | erste Abzugsvorrichtung |
| 70 | zweite Abzugsvorrichtung |
| 71 | Kurzschlussleitung |
| 80 | dritte Abzugsvorrichtung |
| 90 | Regeneratorsystem |
| 91, 92 | Regenerator |
| 93 | erster Vorwärmer |
| 94 | Zuführung für Frischluft |
| 95 | Zuführung von Brennstoff |
| 96 | Regeneratorkopf |
| 97 | Regeneratorfuß |
| 98 | Zufuhr Verbrennungsgas |
| 99 | Ableitung Abgas |
| 100 | elektrisches Heizsystem |
| 120 | zweiter Vorwärmer |
| 140 | Wärmvorrichtung |
| 200 | Filter |
| 201 | Filter |
| 202 | Filter |
| 210 | Gebläse |
| 211 | Gebläse |
| 212 | Gebläse |
| 213 | Gebläse |
| 214 | Gebläse |
| 250 | Brennstoffzufuhr und Luftzufuhr |
| 260 | Kühlluftzufuhr |
| 270 | Kalkaustragung |
| 280 | Schachtofen |
| 290 | Kalksteinzuführung |
| 300 | Vorwärmzone |
| 310 | Reaktionszone |
| 320 | Kühlzone |
| 400 | Regeneratorsystem |
| 401 | Regenerator |
| 402 | Regenerator |
| 403 | Vorwärmer |
| 410 | Zufuhr Kühlluft |
| 420 | Zufuhr Brennstoff |
| 430 | Ableitung Abgas |
| 440 | $CO_2$-Zuführung |
| 450 | $CO_2$-Ableitung |
| 1000 | Vorrichtung |

**Patentansprüche**

1. Vorrichtung (1000) zur Herstellung von gebranntem Kalk oder Dolomit aufweisend

   • einen Schachtofen (20) aufweisend eine Vorwärmzone (21), eine Reaktionszone (22), eine Trennzone (23) und eine Kühlzone (24);
   • eine erste Zuführvorrichtung (40) für $CO_2$ an der Grenze der Trennzone (23) zur Reaktionszone (22);
   • eine erste Abzugsvorrichtung (60) an der Grenze der Kühlzone (24) zur Trennzone (23);
   • eine zweite Abzugsvorrichtung (70) für $CO_2$ am Beginn der Vorwärmzone (21); und
   • mindestens eine Wärmvorrichtung (140);

   **dadurch gekennzeichnet, dass**

   der Schachtofen (20) weiterhin eine dritte Abzugsvorrichtung (80) für $CO_2$ oberhalb der Reaktionszone (22) aufweist;
   die dritte Abzugsvorrichtung (80) außerhalb des Schachtofens (20) vor der mindestens einen Wärmvorrichtung (140) in die zweite Abzugsvorrichtung (70) mündet;
   die zweite Abzugsvorrichtung (70) in die mindestens eine Wärmvorrichtung (140) mündet; und
   die erste Zuführvorrichtung (40) von der mindestens einen Wärmvorrichtung (140) zum Schachtofen (20) ausgebildet ist.

2. Vorrichtung (1000) gemäß Anspruch 1, **dadurch gekennzeichnet, dass** die mindestens eine Wärmvorrichtung (140) ein Regeneratorsystem (90), ein elektrisches Heizsystem (100) oder eine Kombination dieser ist.

3. Vorrichtung (1000) gemäß Anspruch 2, **dadurch gekennzeichnet, dass** die mindestens eine Wärmvorrichtung (140) ein Regeneratorsystem (90) aufweist und dieses mindestens zwei Regeneratoren (91, 92), einen ersten Vorwärmer (93), eine Zuführung für Frischluft (94) und eine Zuführung für einen Brennstoff (95) aufweist.

4. Vorrichtung (1000) gemäß Anspruch 3, **dadurch gekennzeichnet, dass** die erste Abzugsvorrichtung (60) mit dem Regeneratorsystem (90) verbunden ist.

5. Vorrichtung (1000) gemäß einem der vorangegangenen Ansprüche, **dadurch gekennzeichnet, dass** die erste Abzugsvorrichtung (60) mit der zweiten Abzugsvorrichtung (70) in Form eines zweiten Vorwärmers (120) in Kontakt steht.

6. Vorrichtung (1000) gemäß einem der vorangegangenen Ansprüche, **dadurch gekennzeichnet, dass** die zweite Abzugsvorrichtung (70) vor dem Einmünden der dritten Abzugsvorrichtung (80) direkt mit der ersten Zuführvorrichtung (40) über eine Kurzschlussleitung (71) verbunden ist.

7. Verfahren zur Herstellung von gebranntem Kalk oder Dolomit in einer Vorrichtung aufweisend

   • einen Schachtofen (20) aufweisend eine Vorwärmzone (21), eine Reaktionszone (22), eine Trennzone (23) und eine Kühlzone (24);
   • eine erste Zuführvorrichtung (40) für $CO_2$ an der Grenze der Trennzone (23) zur Reaktionszone (22);
   • eine erste Abzugsvorrichtung (60) an der Grenze der Kühlzone (24) zur Trennzone (23);
   • eine zweite Abzugsvorrichtung (70) für $CO_2$ am Beginn der Vorwärmzone (21);
   • mindestens eine Wärmvorrichtung (140);
   • eine dritte Abzugsvorrichtung (80) für $CO_2$ oberhalb der Reaktionszone (22); wobei
   • die dritte Abzugsvorrichtung (80) außerhalb des Schachtofens (20) vor der mindestens einen Wärmvorrichtung (140) in die zweite Abzugsvorrichtung (70) mündet;
   • die zweite Abzugsvorrichtung (70) in die mindestens eine Wärmvorrichtung (140) mündet; und
   • die erste Zuführvorrichtung (40) von der mindestens einen Wärmvorrichtung (140) zum Schachtofen (20) ausgebildet ist;

   **dadurch gekennzeichnet, dass**

   a) Kalkstein oder Dolomitgestein in die Vorwärmzone (21) des Schachtofens (20) eingebracht wird;
   b) vorgewärmtes $CO_2$ mit einer Temperatur $T_1$ und einem Massenstrom $m_1$ zwischen Trennzone (23) und Reaktionszone (22) durch die erste Zuführvorrichtung (40) in den Schachtofen (20) eingebracht wird;

c) ein Teil A des $CO_2$ mit dem Massenstrom $m_3$ und einer Temperatur $T_3$ oberhalb der Reaktionszone (22) durch die dritte Abzugsvorrichtung (80) aus dem Schachtofen (20) abgezogen wird;

d) das restliche $CO_2$ mit einer Temperatur $T_2$ am Beginn der Vorwärmzone (21) durch die zweite Abzugsvorrichtung (70) aus dem Schachtofen (20) abgezogen wird, ein Teil B mit dem Massenstrom $m_B$ des abgezogenen $CO_2$ weitergeleitet wird und ein Teil C mit dem Massenstrom mc weiteren Verwendungen oder geeigneten Lagerstätten zugeführt wird;

e) Teil A des $CO_2$ mit dem Teil B des $CO_2$ zu einem Mischgas mit der Temperatur $T_8$ zusammengeführt wird und das Mischgas mit der Temperatur $T_8$ in der mindestens einen Wärmvorrichtung (140) auf die Temperatur Tw erwärmt wird und das $CO_2$ mit der Temperatur Tw mindestens einen Teil des vorgewärmten $CO_2$ bildet, welches im Verfahrensschritt b) dem Schachtofen (20) durch die erste Zuführvorrichtung (40) zugeführt wird;

f) der gebrannte Kalk oder Dolomit in der Kühlzone (24) durch zugeführte Kühlluft gekühlt wird und die Kühlluft mit der Temperatur $T_5$ und dem Massenstrom $m_5$ zwischen der Kühlzone (24) und der Trennzone (23) durch die erste Abzugsvorrichtung (60) aus dem Schachtofen (20) wieder abgezogen wird; und

g) der gekühlte gebrannte Kalk oder Dolomit mit der Temperatur $T_{Aus}$ und dem Massenstrom $m_{Aus}$ aus dem Schachtofen (20) ausgetragen wird.

8.  Verfahren gemäß Anspruch 7, **dadurch gekennzeichnet, dass** das Verfahren weiterhin die Verfahrensschritte umfasst, dass

    h) ein Teil D des in Verfahrensschritt d) abgezogenen $CO_2$ über eine Kurzsschlussleitung (71) dem auf die Temperatur Tw vorerwärmten $CO_2$ zugeführt wird, bevor dieses in den Schachtofen (20) eingebracht wird.

9.  Verfahren gemäß einem der Ansprüche 7 bis 8, **dadurch gekennzeichnet, dass** vor dem Verfahrensschritt e) der Teil B des in Verfahrensschritt d) abgezogenen $CO_2$ in einem Vorwärmer durch einen Teil der im Verfahrensschritt f) abgezogenen Kühlluft auf die Temperatur $T_{2V}$ erwärmt wird.

10. Verfahren nach einem der Ansprüche 7 bis 9, **dadurch gekennzeichnet, dass** im Verfahrensschritt e) die mindestens eine Wärmvorrichtung (140) mindestens einen Regenerator (90,91), einen Vorwärmer (93), eine Frischluftzufuhr (94) und eine Brennstoffzufuhr (95) umfasst und

    • Frischluft im Vorwärmer (93) auf eine Temperatur $T_{FV}$ erwärmt wird;
    • die auf die Temperatur $T_{FV}$ erwärmte Frischluft für die Verbrennung mit einem Brennstoff ausgewählt aus kohlenstoffhaltigen Brennstoffen und/ oder Wasserstoff; und
    • die bei der Verbrennung entstehenden Verbrennungsgase mit einer Temperatur $T_7$ durch den mindestens einen Regenerator (90, 91) geleitet werden und diesen auf die Temperatur $T_{RK}$ am Regeneratorkopf (96) und $T_{RF}$ am Regeneratorfuß (97) aufheizen.

11. Verfahren nach Anspruch 10, **dadurch gekennzeichnet, dass** der im Vorwärmer (93) auf die Temperatur $T_{FV}$ erwärmten Frischluft zusätzlich ein Teil der im Verfahrensschritt f) abgezogenen Kühlluft zugeführt wird und das Gasgemisch für die Verbrennung mit einem Brennstoff ausgewählt aus kohlenstoffhaltigen Brennstoffen und/ oder Wasserstoff dient; und
    die bei der Verbrennung entstehenden Verbrennungsgase mit einer Temperatur $T_7$ durch den mindestens einen Regenerator (90, 91) geleitet werden und diesen auf die Temperatur $T_{RK}$ am Regeneratorkopf (96) und $T_{RF}$ am Regeneratorfuß (97) aufheizen.

12. Verfahren nach einem der Ansprüche 7 bis 11, **dadurch gekennzeichnet, dass** die Brenntemperatur im Schachtofen (20) durch Regelung der Temperatur $T_1$ geregelt wird, während der Massenstrom $m_1$ konstant ist oder durch eine Regelung des Massenstroms $m_1$, während die Temperatur $T_1$ konstant ist.

13. Verfahren nach einem der Ansprüche 7 bis 12, **dadurch gekennzeichnet, dass** die Reaktivität des gebrannten Kalks bzw. Dolomits durch Regelung des Massenstroms $m_{Aus}$ geregelt wird.

# FIG 1

Stand der Technik

# FIG 2

# FIG 3

# FIG 4

# FIG 5

# FIG 6

FIG 7A

FIG 7B

FIG 7C

FIG 8A

FIG 8B

# FIG 9

$m_{KS}$ = 3,6 kg/s
$T_{KS}$ = 10°C
$E_{KS}$ = 0,0MW

1000

$m_c$ = 1,5 kg/s
$T_c$ = 671°C
$E_c$ = 1,1 MW

$m_B$ = 10,5 kg/s
$T_B$ = 671°C
$E_B$ = 7,4 MW

10
20
70
200
210

$m_2$ = 12 kg/s
$T_2$ = 671°C
$E_2$ = 8,5 MW

21

22

70

201    211

40

$m_1$ = 10,5 kg/s
$T_1$ = 1350°C
$E_1$ = 16,9 MW

$m_8$ = 10,5 kg/s
$T_8$ = 671°C
$E_8$ = 7,4 MW

23

140

60

E= 9,5MW

24

$m_5$ = 2,0 kg/s
$T_5$ = 1000°C
$E_5$ = 2,2 MW

50

$m_{Luft}$ = 2 kg/s
$T_{Luft}$ = 10°C
$E_{Luft}$ = 0,0 MW

30

$m_{Aus}$ = 2,1 kg
$T_{Aus}$ = 30°C
$E_{Aus}$ = 0,1 MW

# FIG 10

$m_{KS} = 3,6$ kg/s
$T_{KS} = 10°C$
$E_{KS} = 0,0$ MW

1000

$m_c = 1,5$ kg/s
$T_c = 163°C$
$E_c = 0,2$ MW

10  70  200  210

20

$m_B = 2,7$ kg/s
$T_B = 163°C$
$E_B = 0,4$ MW

21

$m_2 = 4,2$ kg/s
$T_2 = 163°C$
$E_2 = 0,6$ MW

80

$m_3 = 7,8$ kg/s
$T_3 = 910°C$
$E_3 = 7,9$ MW

70

22

201  211

40

$m_1 = 10,5$ kg/s
$T_1 = 1350°C$
$E_1 = 16,9$ MW

$m_8 = 10,5$ kg/s
$T_8 = 737°C$
$E_8 = 8,3$ MW

23

$E = 8,6$ MW

140

60

24

$m_5 = 2,0$ kg/s
$T_5 = 1000°C$
$E_5 = 2,2$ MW

50

$m_{Luft} = 2$ kg/s
$T_{Luft} = 10°C$
$E_{Luft} = 0,0$ MW

30

$m_{Aus} = 2,1$ kg
$T_{Aus} = 30°C$
$E_{Aus} = 0,1$ MW

FIG 11

Europäisches
Patentamt

European
Patent Office

Office européen
des brevets

# EUROPÄISCHER RECHERCHENBERICHT

**Nummer der Anmeldung**

**EP 22 19 2633**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 201549 A1 (MAERZ OFENBAU [CH]; THYSSENKRUPP AG [DE] ET AL.) 18. August 2022 (2022-08-18) * Abbildungen 4-8 * * Ansprüche 1-17 * ----- | 1-13 | INV. F27B1/00 C04B2/12 F27B1/10 F27D17/00 |

**RECHERCHIERTE SACHGEBIETE (IPC)**

F27B
F27D
C04B

Der vorliegende Recherchenbericht wurde für alle Patentansprüche erstellt

| Recherchenort | Abschlußdatum der Recherche | Prüfer |
|---|---|---|
| Den Haag | 3. Februar 2023 | Peis, Stefano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 22 19 2633

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2023

| Im Recherchenbericht angeführtes Patentdokument | Datum der Veröffentlichung | Mitglied(er) der Patentfamilie | Datum der Veröffentlichung |
|---|---|---|---|
| DE 102021201549 A1 | 18-08-2022 | KEINE | |

EPO FORM P0461

Für nähere Einzelheiten zu diesem Anhang : siehe Amtsblatt des Europäischen Patentamts, Nr.12/82

**EP 4 332 483 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013010909 B3
- JP 2009161391 A
- US 20200048146 A1

**In der Beschreibung aufgeführte Nicht-Patentliteratur**

- *Sustainable lime burning technology with shaft kilns*
- **YANG et al.** Novel Lime Calcination Systems for CO2 Capture and its Thermal-Mass Balance Analysis. *ACS Omega,* 2020, vol. 5 (42), 27413-27424
- **E. SCHIELE ; L.W. BERENS.** Kalk. Verlag Stahleisen M. B. H, 1972, 190